(19) Europäisches Patentamt
European Patent Office
Office européen des brevets

(11) EP 4 450 550 A1

(12) EUROPEAN PATENT APPLICATION
published in accordance with Art. 153(4) EPC

(43) Date of publication:
**23.10.2024 Bulletin 2024/43**

(21) Application number: **23753217.1**

(22) Date of filing: **10.02.2023**

(51) International Patent Classification (IPC):
***C08K 5/5419*** *(2006.01)* ***C08K 5/544*** *(2006.01)*
***C08K 5/56*** *(2006.01)* ***C08L 83/04*** *(2006.01)*
***C08G 77/20*** *(2006.01)* ***C08G 77/12*** *(2006.01)*
***C09D 183/04*** *(2006.01)* ***C09D 7/63*** *(2018.01)*

(52) Cooperative Patent Classification (CPC):
**C08G 77/12; C08G 77/20; C08K 5/5419; C08K 5/544; C08K 5/56; C08L 83/04; C09D 7/63; C09D 183/04**

(86) International application number:
**PCT/KR2023/002013**

(87) International publication number:
**WO 2023/153871 (17.08.2023 Gazette 2023/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.02.2022 KR 20220017903**

(71) Applicant: **LG Chem, Ltd.**
**Yeongdeungpo-gu**
**Seoul 07336 (KR)**

(72) Inventors:
- **PARK, Jun Hyoung**
**Daejeon 34122 (KR)**
- **KIM, Hyun Cheol**
**Daejeon 34122 (KR)**

(74) Representative: **Plasseraud IP**
**104 Rue de Richelieu**
**CS92104**
**75080 Paris Cedex 02 (FR)**

(54) **POLYORGANOSILOXANE**

(57) The present application can provide a polyorganosiloxane and a release composition that can form a release layer capable of securing solvent resistance by maximizing a bonding force between a base film and the release layer. Also, the present application can provide a polyorganosiloxane and a release composition that can form a release layer capable of having an appropriate peel force even under room temperature and high temperature conditions, having a little change in the peel force even under high temperature and ultraviolet irradiation conditions, and securing an excellent residual adhesion rate. In addition, the present application can provide a release layer, and a release film and a pressure-sensitive adhesive film comprising the release layer as applications of the polyorganosiloxane and the release composition.

[Figure 1]

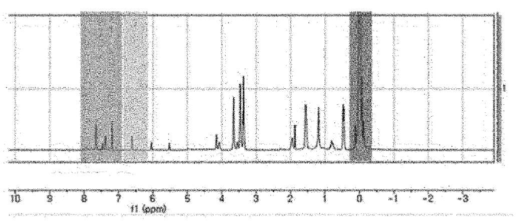




Processed by Luminess, 75001 PARIS (FR)

## Description

### Technical Field

This application claims priority based on Republic of Korea Patent Application No. 10-2022-0017903 filed on February 11, 2022, the disclosure of which is incorporated herein by reference in its entirety.

The present application relates to a polyorganosiloxane, a release composition, a release layer, a release film, and a pressure-sensitive adhesive film.

### Background Art

A release layer is a layer that exhibits a low peel force with respect to the pressure-sensitive adhesive or adhesive. Such a release layer or a release film comprising the same is used for various applications, such as a protective film for a pressure-sensitive adhesive layer, a process film for producing a resin sheet, a process film for forming a ceramic green sheet, and a process film for producing synthetic leather.

A release film is generally manufactured by applying a release composition to a base film such as paper, glass, or a polymer film, and curing it to form a release layer.

Patent Document 1 (Japanese Laid-Open Patent Application Publication No. 2011-52207) discloses a peeling sheet having a peeling layer (release layer) formed of a peeling agent composition (release composition) containing at least a polyolefin, an isocyanate compound, and a polyolefin polyol.

The release layer is basically required to exhibit a low peel force with respect to the pressure-sensitive adhesive or adhesive, but there is also a need to additionally secure solvent resistance. Since organic solvents are often used in a process of forming a release film and/or a process of forming a pressure-sensitive adhesive or adhesive on the release layer, the release layer is required to have solvent resistance.

In addition, it is not appropriate for the peel force of the release layer to the pressure-sensitive adhesive or adhesive to change after the release layer is exposed to heat or ultraviolet rays, so that it is important for the release layer to ensure appropriate heat resistance and ultraviolet resistance.

### Disclosure

### Technical Problem

The present application provides a polyorganosiloxane, a release composition, a release layer, a release film, and a pressure-sensitive adhesive film. The present application can provide a polyorganosiloxane capable of forming a release layer exhibiting an appropriately low peel force with respect to a pressure-sensitive adhesive or adhesive, and a release composition, a release layer, a release film, and a pressure-sensitive adhesive film, comprising the same.

Also, the present application is intended to ensure that the release layer stably maintains a low peel force with respect to the pressure-sensitive adhesive or adhesive over time.

In addition, the present application is intended to form a release layer that when it has been formed on a base film for formation of a release film, it shows excellent adhesiveness with the base film, has excellent heat resistance, solvent resistance, and ultraviolet resistance, and maintains a high residual adhesion rate.

### Technical Solution

Among the physical properties mentioned in this specification, when the measurement temperature affects the relevant physical property, the relevant physical property is a physical property measured at room temperature, unless otherwise specified.

The term room temperature is a natural temperature without artificially heating and cooling, which may mean, for example, any one temperature in a range of 10°C to 30°C, or a temperature of about 27°C or less while being about 15°C or more, about 18°C or more, about 20°C or more, or about 23°C or more, or a temperature of about 25°C or so. Unless specifically stated otherwise in this specification, the unit of temperature is Celsius (°C).

Among the physical properties mentioned in this application, when the measurement pressure affects the relevant physical property, the relevant physical property is a physical property measured at normal pressure, unless otherwise specified.

The term normal pressure is a natural pressure without being artificially pressurized or depressurized, which may mean, for example, any one pressure in a range of 0.9 atm to 1.2 atm or any one pressure in a range of about 740 mmHg to 780 mmHg.

In this specification, the terms weight average molecular weight (Mw) and number average molecular weight

(Mn) are physical properties measured using GPC (Gel permeation chromatography), and the term polydispersity index (PDI) is a value (Mw/Mn) obtained by dividing the weight average molecular weight (Mw) by the number average molecular weight (Mn). The unit of weight average molecular weight (Mw) and number average molecular weight (Mn) mentioned in this specification is g/mol.

In this specification, the number average molecular weight ($M_n$) and weight average molecular weight ($M_w$) can be measured by placing a sample in a 20 mL vial, diluting it with THF (tetrahydrofuran) to a concentration of about 20 mg/mL, and then filtering the standard sample for calibration and the sample to be analyzed through a syringe filter (pore size: 0.2 μm). As an analysis program, Agilent technologies' ChemStation may be used, and the number average molecular weight ($M_n$) and weight average molecular weight ($M_w$) can be obtained by comparing the elution time of the sample with the calibration curve.

<GPC measurement conditions>

Instrument: Agilent technologies' 1200 series

Column: using Agilent technologies' TL Mix. A&B

Solvent: THF

Column temperature: 40°C

Sample concentration: 20 mg/mL, 10 μl injection

Use MP: 364000, 91450, 17970, 4910, 1300 as standard sample

In this specification, the term alkyl group may mean a linear or branched alkyl group with 1 to 20 carbon atoms, or 1 to 16 carbon atoms, or 1 to 12 carbon atoms, or 1 to 8 carbon atoms, or 1 to 6 carbon atoms, or 1 to 4 carbon atoms, or may mean a cyclic alkyl group with 3 to 20 carbon atoms, or 3 to 16 carbon atoms, or 3 to 12 carbon atoms, or 3 to 8 carbon atoms, or 3 to 6 carbon atoms, unless otherwise specified.

In this specification, the term alkoxy group may mean a linear or branched alkoxy group with 1 to 20 carbon atoms, or 1 to 16 carbon atoms, or 1 to 12 carbon atoms, or 1 to 8 carbon atoms, or 1 to 6 carbon atoms, or 1 to 4 carbon atoms, or may mean a cyclic alkoxy group with 3 to 20 carbon atoms, or 3 to 16 carbon atoms, or 3 to 12 carbon atoms, or 3 to 8 carbon atoms, or 3 to 6 carbon atoms, unless otherwise specified.

In this specification, the terms alkylidene group and alkylene group both mean a divalent residue formed by removing two hydrogen atoms from an alkane. However, the alkylidene group means a divalent residue formed by removing two hydrogen atoms from one carbon atom of an alkane, and the alkylene group means a divalent residue formed by removing one hydrogen atom from each of two different carbon atoms of an alkane.

In this specification, the term alkylidene group may mean a linear or branched alkylidene group with 1 to 20 carbon atoms, or 1 to 16 carbon atoms, or 1 to 12 carbon atoms, or 1 to 8 carbon atoms, or 1 to 6 carbon atoms, or 1 to 4 carbon atoms, or may mean a cyclic alkylidene group with 3 to 20 carbon atoms, or 3 to 16 carbon atoms, or 3 to 12 carbon atoms, or 3 to 8 carbon atoms, or 3 to 6 carbon atoms, unless otherwise specified.

In this specification, the term alkylene group may mean a linear or branched alkylene group with 2 to 20 carbon atoms, or 2 to 16 carbon atoms, or 2 to 12 carbon atoms, or 2 to 8 carbon atoms, or 2 to 6 carbon atoms, or 2 to 4 carbon atoms, or may mean a cyclic alkylene group with 3 to 20 carbon atoms, or 3 to 16 carbon atoms, or 3 to 12 carbon atoms, or 3 to 8 carbon atoms, or 3 to 6 carbon atoms, unless otherwise specified.

In this specification, the term alkenyl group or alkenylene group may be a linear or branched alkenyl group or alkenylene group with 2 to 20 carbon atoms, or 2 to 16 carbon atoms, or 2 to 12 carbon atoms, or 2 to 8 carbon atoms, or 2 to 6 carbon atoms; or a cyclic alkenyl group or alkenylene group with 3 to 20 carbon atoms, or 3 to 16 carbon atoms, or 3 to 12 carbon atoms, or 3 to 8 carbon atoms, or 3 to 6 carbon atoms, unless otherwise specified.

In this specification, the term alkynyl group or alkynylene group may be a linear or branched alkynyl group or alkynylene group with 2 to 20 carbon atoms, or 2 to 16 carbon atoms, or 2 to 12 carbon atoms, or 2 to 8 carbon atoms, or 2 to 6 carbon atoms, or may be a cyclic alkynyl group or alkynylene group with 3 to 20 carbon atoms, or 3 to 16 carbon atoms, or 3 to 12 carbon atoms, or 3 to 8 carbon atoms, or 3 to 6 carbon atoms, unless otherwise specified.

In this specification, the term aryl group means a monovalent residue derived from an aromatic compound, unless otherwise specified, and the term arylene group means a divalent residue derived from an aromatic compound. Here, the aromatic compound may be benzene, or a compound containing a structure in which two or more benzenes

are linked to each other or are condensed or bonded while sharing one or two or more carbon atoms, or a derivative thereof. For example, in this specification, the scope of the term aryl group may include not only functional groups commonly referred to as aryl groups, but also so-called aralkyl groups or arylalkyl groups, and the like. The aromatic compound forming the aryl group or arylene group may be, for example, an aromatic compound with 6 to 25 carbon atoms, 6 to 21 carbon atoms, 6 to 18 carbon atoms, or 6 to 12 carbon atoms, or benzene.

In this specification, the term monovalent hydrocarbon group may refer to a monovalent residue derived from a compound consisting of carbon and hydrogen or a derivative of such a compound, unless otherwise specified. For example, the monovalent hydrocarbon group may include 1 to 25 carbon atoms. The monovalent hydrocarbon group may be exemplified by, for example, the alkyl group, alkenyl group, alkynyl group, or aryl group, and the like.

The alkyl group, alkoxy group, alkylidene group, alkylene group, alkenyl group, alkenylene group, alkynyl group, alkynylene group, aryl group, arylene group, or monovalent hydrocarbon group may also be optionally substituted with one or more substituents. In this case, the substituent may be exemplified by one or more selected from the group consisting of halogen (chlorine (Cl), iodine (I), bromine (Br), or fluorine (F)), an epoxy group, a glycidyl group, a glycidyloxy group, an aryl group, a heteroaryl group, an alkoxy group, a cyano group, a carboxyl group, an acryloyl group, a methacryloyl group, an acryloyloxy group, a methacryloyloxy group, a carbonyl group, and a hydroxy group, but is not limited thereto.

In this specification, the term heteroaryl group is an aromatic ring substituent group containing one or more atoms (heteroatoms) other than carbon in the ring structure, where the heteroatom may be exemplified by one or more selected from the group consisting of nitrogen (N), oxygen (O), sulfur (S), selenium (Se) and tellurium (Te). In this specification, the atom constituting the ring structure of the heteroaryl group may be called a ring atom. The heteroaryl group may include a monocyclic ring structure or a polycyclic ring structure. The heteroaryl group may be, for example, a heteroaryl group with 2 to 30 carbon atoms, or 2 to 26 carbon atoms, or 2 to 22 carbon atoms, or 2 to 20 carbon atoms, or 2 to 18 carbon atoms, or 2 to 15 carbon atoms. The number of ring atoms in the heteroaryl group is not particularly limited, but the number of ring atoms may be 5 to 30, 5 to 25, 5 to 20, 5 to 15, 5 to 10, or 5 to 8 or so. The heteroaryl group may be exemplified by, for example, one or more selected from the group consisting of a thiophene group, a furan group, a pyrrole group, an imidazolyl group, a thiazolyl group, an oxazolyl group, an oxadiazolyl group, a triazolyl group, a pyridyl group, a bipyridyl group, a pyrimidyl group, a triazinyl group, an acridyl group, a pyridazinyl group, a pyrazinyl group, a quinolinyl group, a quinazolinyl group, a quinoxalinyl group, a phthalazinyl group, a pyridopyrimidinyl group, a pyridopyrazinyl group, a pyrazinopyrazinyl group, an isoquinolinyl group, an indole group, a carbazolyl group, a benzoxazolyl group, a benzimidazolyl group, a benzothiazolyl group, a benzocarbazolyl group, a dibenzocarbazolyl group, a benzothiophene group, a dibenzothiophene group, a benzofuran group, a dibenzofuran group, a benzosilol group, a dibenzosilol group, a phenanthrolinyl group, an isoxazolyl group, a thiadiazolyl group, a phenothiazinyl group, a phenoxazine group and a condensed structure of the foregoing, and the like, but is not limited thereto.

In this specification, the term heteroarylene group means a divalent residue formed by further removing one hydrogen atom from the heteroaryl group.

The heteroaryl group or heteroarylene group may also be optionally substituted with one or more substituents. In this case, the substituent may be exemplified by one or more selected from the group consisting of halogen (chlorine (Cl), iodine (I), bromine (Br), or fluorine (F)), an epoxy group, a glycidyl group, a glycidyloxy group, an aryl group, a heteroaryl group, an alkoxy group, a cyano group, a carboxyl group, an acryloyl group, a methacryloyl group, an acryloyloxy group, a methacryloyloxy group, a carbonyl group, and a hydroxy group, but is not limited thereto.

The present application relates to a polyorganosiloxane. As is known, the term polyorganosiloxane means a polymer comprising chains formed by a siloxane bond (Si-O-Si).

The polyorganosiloxane is usually formed by comprising one or more siloxane units selected from the group consisting of so-called M unit, D unit, T unit and Q unit.

In this specification, the M unit is a so-called monofunctional siloxane unit (i.e., a siloxane unit with a structure in which the silicon atom is linked to one oxygen atom), which may be usually expressed as ($R_3SiO_{1/2}$); the D unit is a so-called bifunctional siloxane unit (i.e., a siloxane unit with a structure in which the silicon atom is linked to two oxygen atoms), which may be usually expressed as ($R_2SiO_{2/2}$); the T unit is a so-called trifunctional siloxane unit (i.e., a siloxane unit with a structure in which the silicon atom is linked to three oxygen atoms), which may be usually expressed as ($RSiO_{3/2}$); and the Q unit is a so-called tetrafunctional siloxane unit (i.e., a siloxane unit with a structure in which the silicon atom is linked to four oxygen atoms), which may be usually expressed as ($SiO_{4/2}$).

The polyorganosiloxane of the present application contains specific siloxane units, which may accordingly form the release layer to be intended in the present application.

The polyorganosiloxane may be a monomolecular polyorganosiloxane, or a mixture of bimolecular or higher polyorganosiloxanes. For example, the monomolecular polyorganosiloxane or the mixture of bimolecular or higher polyorganosiloxanes may have an average unit (average unit of Formula 5) to be described below.

The polyorganosiloxane may contain a siloxane unit of Formula 1 below.

[Formula 1] $(R^1{}_mR^2{}_nSiO_{(4-m-n)/2})$

In Formula 1, $R^1$ and $R^2$ are each a substituent bonded to the silicon atom of the siloxane unit. In Formula 1, $R^1$ may be a functional group containing a carbon-carbon double bond, and $R^2$ may be hydrogen, a hydroxy group, an alkoxy group, or a monovalent hydrocarbon group. In Formula 1, m may be a number of 1 or more, n may be a number of 0 or more, and m+n may be a number in a range of 1 to 3.

In Formula 1, the case where m+n is 1, 2, and 3 means the case where the siloxane units of Formula 1 are T units, D units, and M units, respectively. The siloxane unit of Formula 1 may be the T unit, D unit, or M unit.

In Formula 1, $R^1$ may be a functional group containing a carbon-carbon double bond, and in one example, the functional group may be a functional group containing an alkenyl group or a functional group containing a (meth)acryloyl group.

In this specification, the term (meth)acrylic refers to acrylic and methacrylic together.

In one example, the functional group containing the carbon-carbon double bond may be a functional group of Formula 3 below.

[Formula 3]

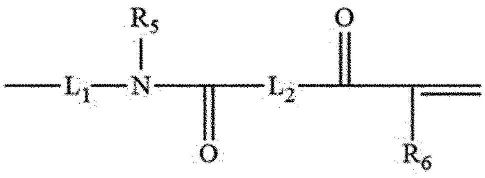

In Formula 3, $L_1$ may be a single bond, an alkylidene group, or an alkylene group, $L_2$ may be an alkylidene group or an alkylene group, and $R_5$ and $R_6$ may each independently be hydrogen, an alkyl group, or an aryl group.

Here, the single bond means the case where $L_1$ does not exist. Thus, for example, if $L_1$ is a single bond, the nitrogen atom of Formula 3 is directly linked to the silicon atom of the siloxane unit of Formula 1.

In a suitable example, $L_1$ and $L_2$ of Formula 1 may each independently be an alkylidene group or an alkylene group.

In Formula 3, the specific types of alkyl group, alkylidene group, alkylene group, and aryl group are as described at the opening of this specification.

The $L_1$ of Formula 3 or the nitrogen atom (if $L_1$ is a single bond) may be linked to the silicon atom of the siloxane unit of Formula 1.

In Formula 1, $R^2$ may be hydrogen, a hydroxy group, an alkoxy group, or a monovalent hydrocarbon group. Here, as described above, the monovalent hydrocarbon group may be an alkyl group, an alkenyl group, an alkynyl group, or an aryl group, and in a suitable example, it may be an alkyl group, but is not limited thereto.

Specific types of the alkoxy group, monovalent hydrocarbon group, alkyl group, alkenyl group, or alkynyl group are as described at the opening of this specification.

In Formula 1, the lower limit of m may be 1, 2, or 3, and the upper limit thereof may be 3, 2, or 1. The m may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. In one example, m may be 1.

In Formula 1, the lower limit of n may be 0, 1, or 2, and the upper limit thereof may be 2, 1, or 0. The n may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. In one example, n may be 1 or 2.

The lower limit of the mol% of the siloxane unit of Formula 1 relative to the total number of moles of all siloxane units contained in the polyorganosiloxane (total number of moles of M, D, T, and Q units) may be 0.5 mol%, 1 mol%, 2 mol%, 3 mol%, 4 mol%, 5 mol%, 10 mol%, 15 mol%, 20 mol%, 25 mol%, or 30 mol% or so, and the upper limit thereof may be 100 mol%, 95 mol%, 90 mol%, 85 mol%, 80 mol%, 75 mol%, 70 mol%, 65 mol%, 60 mol%, 55 mol%, 50 mol%, 45 mol%, 40 mol%, 35 mol%, 30 mol%, 25 mol%, 20 mol%, 15 mol%, 10 mol%, 9 mol%, 8 mol%, 7 mol%, 6 mol%, 5 mol%, 4 mol%, or 3 mol% or so. The mol% may be more than or equal to, or more than any one of the above-described lower limits, or may be less than or equal to, or less than any one of the above-described upper limits, or may be within a range of less than or equal to, or less than any one of the above-described upper limits while being more than or equal

to, or more than any one of the above-described lower limits.

In addition, the lower limit of the mol% of the functional group containing a carbon-carbon double bond contained in the siloxane unit of Formula 1 relative to the total number of moles of all silicon atom-bonded organic groups contained in the polyorganosiloxane may be 0.5 mol%, 1 mol%, 2 mol%, 3 mol%, 4 mol%, 5 mol%, or 10 mol% or so, and the upper limit thereof may be 50 mol%, 45 mol%, 40 mol%, 35 mol%, 30 mol%, 25 mol%, 20 mol%, 15 mol%, 10 mol%, 9 mol%, 8 mol%, 7 mol%, 6 mol%, 5 mol%, 4 mol%, 3 mol%, or 2 mol% or so. The mol% may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The polyorganosiloxane may also contain a siloxane unit of Formula 2 below.

[Formula 2] $(R^3_pR^4_qSiO_{(4-P-q)/2})$

In Formula 2, $R^3$ and $R^4$ are each a substituent bonded to the silicon atom of the siloxane unit. In Formula 2, $R^3$ may be a ketone group-containing functional group, and $R^4$ may be hydrogen, a hydroxy group, an alkoxy group, or a monovalent hydrocarbon group. In Formula 2, p may be a number of 1 or more, q may be a number of 0 or more, and p+q may be a number in a range of 1 to 3.

In Formula 2, the case where p+q is 1, 2, and 3 means the case where the siloxane units of Formula 2 are T units, D units, and M units, respectively. The siloxane unit of Formula 2 may be the T unit, D unit, or M unit.

In Formula 2, $R^3$ may be a ketone group-containing functional group.

In one example, the ketone group-containing functional group may be a functional group of Formula 4 below.

[Formula 4]

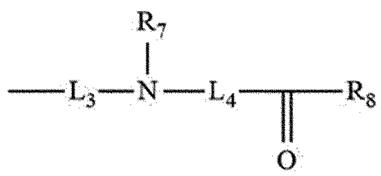

In Formula 4, $L_3$ may be a single bond, an alkylidene group, or an alkylene group, $L_4$ may be an arylene group, $R_7$ may be hydrogen or an alkyl group, and $R_8$ may be an aryl group.

Here, the single bond means the case where $L_3$ does not exist. Thus, for example, if $L_3$ is a single bond, the nitrogen atom of Formula 4 is directly linked to the silicon atom of the siloxane unit of Formula 2.

In a suitable example, L3 in Formula 2 may be an alkylidene group or an alkylene group.

In Formula 4, the specific types of alkyl group, alkylidene group, alkylene group, aryl group, and arylene group are as described at the opening of this specification.

The $L_3$ of Formula 4 or the nitrogen atom (if $L_3$ is a single bond) may be linked to the silicon atom of the siloxane unit of Formula 2.

In Formula 2, $R^4$ may be hydrogen, a hydroxy group, an alkoxy group, or a monovalent hydrocarbon group. As described above, the monovalent hydrocarbon group may be an alkyl group, an alkenyl group, an alkynyl group, or an aryl group, and in a suitable example, it may be an alkyl group, but is not limited thereto.

Specific types of the alkoxy group, monovalent hydrocarbon group, alkyl group, alkenyl group, or alkynyl group are as described at the opening of this specification.

In Formula 2, the lower limit of p may be 1, 2, or 3, and the upper limit thereof may be 3, 2, or 1. The p may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. In one example, p may be 1.

In Formula 2, the lower limit of q may be 0, 1, or 2, and the upper limit thereof may be 2, 1, or 0. The q may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. In one example, q may be 1 or 2.

The lower limit of the mol% of the siloxane unit of Formula 2 relative to the total number of moles of all siloxane

units contained in the polyorganosiloxane (total number of moles of M, D, T, and Q units) may be 0.5 mol%, 1 mol%, 2 mol%, 3 mol%, 4 mol%, 5 mol%, 10 mol%, 15 mol%, 20 mol%, 25 mol%, or 30 mol% or so, and the upper limit thereof may be 100 mol%, 95 mol%, 90 mol%, 85 mol%, 80 mol%, 75 mol%, 70 mol%, 65 mol%, 60 mol%, 55 mol%, 50 mol%, 45 mol%, 40 mol%, 35 mol%, 30 mol%, 25 mol%, 20 mol%, 15 mol%, 10 mol%, 9 mol%, 8 mol%, 7 mol%, 6 mol%, 5 mol%, 4 mol%, or 3 mol% or so. The mol% may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

In addition, the lower limit of the mol% of the functional group containing a carbon-carbon double bond contained in the siloxane unit of Formula 2 relative to the total number of moles of all silicon atom-bonded organic groups contained in the polyorganosiloxane may be 0.5 mol%, 1 mol%, 2 mol%, 3 mol%, 4 mol%, 5 mol%, or 10 mol% or so, and the upper limit thereof may be 50 mol%, 45 mol%, 40 mol%, 35 mol%, 30 mol%, 25 mol%, 20 mol%, 15 mol%, 10 mol%, 9 mol%, 8 mol%, 7 mol%, 6 mol%, 5 mol%, 4 mol%, 3 mol%, or 2 mol% or so. The mol% may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

In the polyorganosiloxane, the lower limit of the ratio of the number of moles of the siloxane unit of Formula 2 above to the number of moles of the siloxane unit of Formula 1 above may be 0.1, 0.3, 0.5, 0.7, or 0.9 or so, and the upper limit thereof may be 2, 1.8, 1.6, 1.4, 1.2, or 1.1 or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

Such a polyorganosiloxane may have a specific average unit. In this specification, the term average unit of polyorganosiloxane means a unit expressing the ratio of other atoms or functional groups when the entire silicon atom contained in the polyorganosiloxane has been converted to 1. Such an average unit may be for the monomolecular polyorganosiloxane, or may also be for the mixture of bimolecular or higher polyorganosiloxanes. When the average unit is for the mixture of bimolecular or higher polyorganosiloxanes, the ratio of other functional groups or atoms is calculated by assuming that the number of all silicon atoms contained in the mixture is 1. In the process of producing the polyorganosiloxane, there are not many cases in which only the monomolecular polyorganosiloxane is produced, and usually the mixture of bimolecular or higher polyorganosiloxanes is produced.

The polyorganosiloxane may have an average unit of Formula 5 below.

[Formula 5] $$R^1_aR^3_bR^5_cSiO_{(4-a-b-c)/2}$$

In Formula 5, $R^1$ is the same as $R^1$ in Formula 1, $R^3$ is the same as $R^3$ in Formula 2, and $R^5$ is hydrogen, a hydroxy group, an alkoxy group, or a monovalent hydrocarbon group. As described above, the monovalent hydrocarbon group may be an alkyl group, an alkenyl group, an alkynyl group, or an aryl group, and in a suitable example, it may be an alkyl group, but is not limited thereto.

In Formula 5, a, b, and c are arbitrary numbers.

In one example, the lower limit of a above may be 0.001, 0.005, 0.01, 0.015, 0.02, 0.05, 0.1, 0.15, 0.2, 0.25, or 0.3, and the upper limit thereof may be 1, 0.9, 0.8, 0.7, 0.6, 0.5, 0.4, 0.3, 0.2, 0.1, 0.09, 0.08, 0.07, 0.06, 0.05, 0.04, or 0.03 or so. The a may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

In one example, the lower limit of b above may be 0.001, 0.005, 0.01, 0.015, 0.02, 0.05, 0.1, 0.15, 0.2, 0.25, or 0.3, and the upper limit thereof may be 1, 0.9, 0.8, 0.7, 0.6, 0.5, 0.4, 0.3, 0.2, 0.1, 0.09, 0.08, 0.07, 0.06, 0.05, 0.04, or 0.03 or so. The b may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

In one example, the lower limit of c above may be 0.1, 0.5, 1, 1.5, or 2 or so, and the upper limit thereof may be 10, 9, 8, 7, 6, 5, 4, 3, 2.5, or 2 or so. The c may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The lower limit of the number of silicon atoms contained in the polyorganosiloxane of such an average unit may be 2, 3, 5, 10, 15, 20, 25, 30, 35, or 40 or so, and the upper limit thereof may be 100, 95, 90, 85, 80, 75, 70, 65,

60, 55, 50, 45, 40, 35, 30, 25, 20, 15, 10, or 5 or so. The number of silicon atoms may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

Such a polyorganosiloxane may have a substantially linear structure. In this case, the polyorganosiloxane may be substantially composed of only M units and D units, or may contain T and/or Q units together with M units and D units, but have a structure that the ratio of the T and/or Q units is below a certain level.

For example, in the polyorganosiloxane, the upper limit of the ratio of the total number of moles of the T and Q units to the number of moles of all siloxane units contained in the polyorganosiloxane (100 × (number of moles of T unit + number of moles of Q unit)/number of moles of total siloxane units) may be 10 mol%, 9 mol%, 8 mol%, 7 mol%, 6 mol%, 5 mol%, 4 mol%, 3 mol%, 2 mol%, 1 mol%, or 0.5 mol% or so, and the lower limit thereof may be 0 mol%. The ratio may be less than or equal to, or less than any one of the above-described upper limits, or may be within a range of less than or equal to, or less than any one of the above-described upper limits while being more than or equal to, or more than any one of the above-described lower limits.

The lower limit of the weight average molecular weight of the polyorganosiloxane may be 500, 1,000, 1,500, 2,000, 2,500, 3,000, or 3,500 or so, and the upper limit thereof may be 10,000, 9,500, 9,000, 8,500, 8,000, 7,500, 7,000, 6,500, 6,000, 5,500, 5,000, 4,500, or 4,000 or so. The weight average molecular weight may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The present application also relates to a release composition. The term release composition means a composition capable of forming a release layer.

The release composition may comprise a silicone resin component. The term silicone resin component means a component consisting of one polyorganosiloxane, or a mixture of two or more polyorganosiloxanes.

The silicone resin component may be a curable silicone resin component, and in this case, the release composition may be a curable composition.

In this specification, the term curable composition may comprise components capable of being converted to resins through a curing reaction or polymerization reaction, as well as components generally known as resins.

The release composition may comprise the polyorganosiloxane containing the siloxane unit of Formula 1 and/or 2 as described above, together with the silicone resin component. The polyorganosiloxane containing the siloxane unit of Formula 1 and/or 2 included in the release composition may be called an addition polyorganosiloxane to distinguish it from the polyorganosiloxane included in the silicone resin component.

In one example, the silicone resin component may have a larger weight average molecular weight than the addition polyorganosiloxane.

The release composition may be a solvent, aqueous, or solventless release composition.

When the release composition is curable, the composition may be an active energy ray (e.g., ultraviolet ray) curing type, a moisture curing type, a heat curing type, or a room temperature curing type, and in some cases, it may be a hybrid form in which two or more of the foregoing are combined. When the release composition is an active energy ray curing type, the curing of the release composition may be performed by irradiation of active energy rays such as ultraviolet rays; when the release composition is a moisture curing type, the curing of the release composition may be performed by a method of maintaining it under appropriate moisture; in the case of a heat curing type, the curing of the release composition may be performed by a method of applying appropriate heat thereto; or in the case of a room temperature curing type, the curing of the release composition may be performed by a method of maintaining the release composition at room temperature.

The lower limit of the ratio of the silicone resin component in the release composition of the present application may be 10 wt%, 11 wt%, 12 wt%, 14 wt%, 16 wt%, or 18 wt% or so, and the upper limit thereof may be 40 wt%, 39 wt%, 38 wt%, 36 wt%, 34 wt%, 32 wt%, 30 wt%, 28 wt%, 26 wt%, 24 wt%, 22 wt%, or 20 wt% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits. Within the above range, it is possible to provide a release composition capable of securing an appropriate release peel force and an excellent residual adhesion rate.

In another example, the lower limit of the ratio of the silicone resin component in the release composition of the present application may be 60 wt%, 65 wt%, 70 wt%, 75 wt%, 80 wt%, 85 wt%, or 90 wt% or so, and the upper limit thereof may be100 wt%, 99 wt%, 98 wt%, 96 wt%, 95 wt%, 94 wt%, 93 wt%, 92 wt%, 91 wt%, 90 wt%, 89 wt%, or 88 wt% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than

any one of the above-described lower limits. Within the above range, it is possible to provide a release composition capable of securing an appropriate release peel force and an excellent residual adhesion rate. The ratio is a ratio based on solid content, and therefore, when the release composition comprises a solvent, it is a ratio to the total weight of the release composition excluding the weight of the solvent.

In one example, the silicone resin component of the release composition may be a so-called addition-curing type component. Such a resin component may comprise, for example, a polyorganosiloxane containing siloxane units having an alkenyl group bonded to a silicon atom (hereinafter may be referred to as a first polyorganosiloxane or a first polyorganosiloxane component).

The lower limit of the ratio of the first polyorganosiloxane component based on the total weight of the curable silicone resin component in the release composition according to one example of the present application may be 90 wt%, 91 wt%, 92 wt%, 93 wt%, 94 wt%, 95 wt%, 96 wt%, 97 wt%, or 98 wt% or so, and the upper limit thereof may be 100 wt%, 99.9 wt%, or 99 wt%. or so The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits. When the curable silicone resin component contains the first polyorganosiloxane component within the above range, it is possible to secure an appropriate release peel force.

In one example, the first polyorganosiloxane component may have an average unit of Formula 6 below. Such an average unit may be for the monomolecular polyorganosiloxane, or may also be for the mixture of bimolecular or higher polyorganosiloxanes. When the average unit is for the mixture of bimolecular or higher polyorganosiloxanes, the ratio of other functional groups or atoms is calculated by assuming that the number of all silicon atoms contained in the mixture is 1.

[Formula 6] $P_aQ_bSiO_{(4-a-b)/2}$

In Formula 6, P may be an alkenyl group, and Q may be an alkoxy group, a hydroxy group, or a monovalent hydrocarbon group.

In Formula 6, the specific types of alkenyl group, alkoxy group, and monovalent hydrocarbon group are as described at the opening of this specification.

In Formula 6, a and b are arbitrary numbers.

In one example, the lower limit of a above may be 0.0001, 0.0005, 0.001, 0.002, 0.005, or 0.01 or so, and the upper limit thereof may be 0.1, 0.09, 0.08, 0.07, 0.06, 0.05, 0.04, 0.03, 0.02, 0.01, 0.009, 0.008, 0.007, 0.006, 0.005, 0.004, or 0.003 or so. The a may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

In one example, the lower limit of b above may be 0.5, 1, 1.5, 1.7, or 1.9 or so, and the upper limit thereof may be 4, 3.5, 3, 2.5, or 2 or so. The b may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The lower limit of the ratio of the number of moles of all alkenyl groups contained in the average unit of Formula 6 above based on the number of moles of all silicon atom-bonded organic groups contained in the average unit of Formula 6 above may be 0.01 mol%, 0.05 mol%, 0.1 mol%, 0.15 mol%, 0.2 mol%, 0.25 mol%, 0.3 mol%, 0.35 mol%, 0.4 mol%, 0.45 mol%, or 0.5 mol% or so, and the upper limit thereof may be 5 mol%, 4 mol%, 3 mol%, 2 mol%, 1 mol%, 0.9 mol%, 0.8 mol%, 0.7 mol%, or 0.6 mol% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits. Under such a ratio, it is possible to secure appropriate curability, and it is possible to form a release layer having desired release characteristics.

Such an alkenyl group may be present, for example, in a siloxane unit of Formula 8 below and/or a siloxane unit of Formula 9 below.

[Formula 8] $ViR^6{}_2SiO_{1/2}$

[Formula 9] $ViR^6SiO_{2/2}$

In Formulas 8 and 9, Vi is an alkenyl group, and $R^6$ is a hydroxy group, an alkoxy group, or a monovalent

hydrocarbon group. Here, the specific types of alkenyl group, alkoxy group, and monovalent hydrocarbon group are as described at the opening of this specification.

The lower limit of the ratio of the siloxane unit of Formula 8 above based on all siloxane units in the first polyorganosiloxane component may be 0.001 mol%, 0.005 mol%, 0.01 mol%, 0.02 mol%, 0.03 mol%, 0.04 mol%, 0.05 mol%, 0.06 mol%, 0.07 mol%, 0.08 mol%, 0.09 mol%, or 0.095 mol% or so, and the upper limit thereof may be 0.5 mol%, 0.4 mol%, 0.3 mol%, 0.2 mol%, 0.1 mol%, 0.09 mol%, 0.08 mol%, or 0.07 mol% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The lower limit of the ratio of the siloxane unit of Formula 9 above based on all siloxane units in the first polyorganosiloxane component may be 0.01 mol%, 0.05 mol%, 0.1 mol%, 0.15 mol%, 0.2 mol%, 0.3 mol%, 0.4 mol%, 0.5 mol%, 0.6 mol%, 0.7 mol%, 0.8 mol%, or 0.9 mol% or so, and the upper limit thereof may be 10 mol%, 9 mol%, 8 mol%, 7 mol%, 6 mol%, 5 mol%, 4 mol%, 3 mol%, 2 mol%, or 1 mol% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The first polyorganosiloxane component may comprise both siloxane units of Formulas 8 and 9 above. In this case, the lower limit of the molar ratio of the siloxane unit of Formula 9 above to the siloxane unit of Formula 8 above may be 0.1, 0.5, 1, 1.5, 2, 2.5, 3, 4, 5, 6, 7, 8, 9, or 9.5 or so, and the upper limit thereof may be 20, 18, 16, 14, 12, 11, 10, 9, 8, 7, 6, 5, 4, or 3 or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The lower limit of the number of silicon atoms contained in the first polyorganosiloxane component may be 500, 1,500, 2,000, 2,500, or 3,000 or so, and the upper limit thereof may be 10,000, 5,000, 4,000, 3,500, 3,000, 2,500, or 2,100 or so. The number of silicon atoms may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The first polyorganosiloxane component may have a substantially linear structure. In this case, the polyorganosiloxane may be substantially composed of only M units and D units, or may contain T and/or Q units together with M units and D units, but may have a structure that the ratio of the T and/or Q units is below a certain level.

For example, in the first polyorganosiloxane component, the upper limit of the ratio of the total number of moles of the T and Q units to the number of moles of all siloxane units contained in the polyorganosiloxane (100 × (number of moles of T unit + number of moles of Q unit)/number of moles of all siloxane units) may be 10 mol%, 9 mol%, 8 mol%, 7 mol%, 6 mol%, 5 mol%, 4 mol%, 3 mol%, 2 mol%, 1 mol%, or 0.5 mol% or so, and the lower limit thereof may be 0 mol%. The ratio may be less than or equal to, or less than any one of the above-described upper limits, or may be within a range of less than or equal to, or less than any one of the above-described upper limits while being more than or equal to, or more than any one of the above-described lower limits.

The lower limit of the weight average molecular weight of the first polyorganosiloxane component may be 100,000, 150,000, 200,000, 250,000, 300,000, or 350,000 or so, and the upper limit thereof may be 1,000,000, 950,000, 900,000, 850,000, 800,000, 750,000, 700,000, 650,000, 600,000, 550,000, 500,000, 450,000, or 400,000 or so. The weight average molecular weight may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The lower limit of the polydispersity index (PDI) of the first polyorganosiloxane component may be 1, 1.25, or 1.5 or so, and the upper limit thereof may be 5, 3.5, or 2.5 or so. The polydispersity index may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

In one example, the first polyorganosiloxane component as above may comprise a compound represented by Formula A below.

[Formula A]

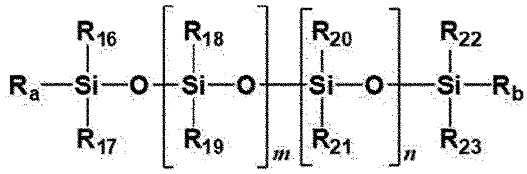

In Formula A, $R_a$, $R_b$, and $R_{21}$ may each independently be an alkenyl group with 2 to 20 carbon atoms, 2 to 16 carbon atoms, 2 to 12 carbon atoms, 2 to 8 carbon atoms, 2 to 4 carbon atoms, or 2 or 3 carbon atoms.

In Formula A, $R_{16}$, $R_{17}$, $R_{18}$, $R_{19}$, $R_{20}$, $R_{22}$, and $R_{23}$ may each independently be an alkyl group with 1 to 20 carbon atoms, 1 to 16 carbon atoms, 1 to 12 carbon atoms, 1 to 8 carbon atoms, 1 to 4 carbon atoms, 1 to 3 carbon atoms, or 1 or 2 carbon atoms.

In Formula A, m and n may each independently be a number in a range of 1 to 10,000, 1 to 8,000, 1 to 6,000, 1 to 4,000, 1 to 3,000, 1 to 2,000, or 1 to 1,000. Also, specifically, in Formula 1, m may be in the range of 1 to 5,000, 10 to 4,500, 50 to 5,000, 100 to 4,500, 500 to 4,000, or 1,000 to 3,000. In addition, n in Formula 1 may be in the range of 1 to 100, 2 to 75, 3 to 50, or 4 to 25.

The first polyorganosiloxane component may comprise the compound represented by Formula A in an amount of 100 wt% relative to the total weight of the first polyorganosiloxane component. In another example, the first polyorganosiloxane component may comprise the compound represented by Formula A below in an amount of 90 wt% or more, 92.5 wt% or more, 95 wt% or more, 97.5 wt% or more, or 99 wt% or more relative to the total weight of the first polyorganosiloxane component.

The first polyorganosiloxane component may further comprise a compound, which contains an alkenyl group at the other end and a dialkylsiloxane repeating unit, other than the compound represented by Formula A.

In one example, the silicone resin component of the release composition may further comprise a polyorganosiloxane component having hydrogen atoms bonded to silicon atoms. Such a component may be referred to as a second polyorganosiloxane component.

The second polyorganosiloxane component may form a crosslinked structure with the first polyorganosiloxane component.

In one example, the second polyorganosiloxane component may have an average unit of Formula 7 below. Such an average unit may be for the monomolecular polyorganosiloxane, or may be for the mixture of bimolecular or higher polyorganosiloxanes. When the average unit is for the mixture of bimolecular or higher polyorganosiloxanes, the ratio of other functional groups or atoms is calculated by assuming that the number of all silicon atoms contained in the mixture is 1.

[Formula 7] $H_cQ_dSiO_{(4-c-d)/2}$

In Formula 7, Q is the same as Q in Formula 6.

In Formula 7, c and d are arbitrary numbers.

In one example, the lower limit of c above may be 0.01, 0.05, 0.1, 0.15, 0.2, 0.25, 0.3, 0.35, 0.4, 0.45, 0.5, 0.55, or 0.6 or so, and the upper limit thereof may be 2, 1.5, 1, 0.9, 0.8, 0.7, or 0.65 or so. The c may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

In one example, the lower limit of d above may be 0.5, 1, or 1.5 or so, and the upper limit thereof may be 4, 3.5, 3, 2.5, 2, or 1.5 or so. The d may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The lower limit of the ratio of the number of moles of all silicon atom-bonded hydrogen atoms contained in the average unit of Formula 7 above based on the number of moles of all silicon atom-bonded organic groups contained in the average unit of Formula 7 may be 1 mol%, 5 mol%, 10 mol%, 15 mol%, 20 mol%, 25 mol%, or 30 mol% or so, and the upper limit thereof may be 85 mol%, 80 mol%, 75 mol%, 70 mol%, 65 mol%, 60 mol%, 55 mol%, 50 mol%, 45 mol%, 40 mol%, 35 mol%, 30 mol%, 25 mol%, or 20 mol% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits. Under such a ratio, it is

possible to secure appropriate curability, and it is possible to form a release layer having desired release characteristics.

For example, the silicon atom-bonded hydrogen atom may exist at least in the siloxane unit of Formula 10 below.

[Formula 10] $HR^6SiO_{2/2}$

In Formula 10, $R^6$ is a hydroxy group, an alkoxy group, or a monovalent hydrocarbon group. The specific types of alkenyl group, alkoxy group, and monovalent hydrocarbon group are as described at the opening of this specification.

The lower limit of the ratio of the number of moles of the siloxane unit of Formula 10 above based on the total number of moles of siloxane units containing silicon atom-bonded hydrogen atoms among all siloxane units contained in the second polyorganosiloxane component may be 85 mol%, 90 mol%, 95 mol%, 96 mol%, 97 mol%, 98 mol%, 99 mol%, or 99.5 mol% or so, and the upper limit thereof may be 100 mol% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The lower limit of the ratio of the siloxane unit of Formula 10 above based on all siloxane units in the second polyorganosiloxane component may be 10 mol%, 15 mol%, 20 mol%, 25 mol%, 30 mol%, 35 mol%, 40 mol%, 45 mol%, 50 mol%, 55 mol%, or 60 mol% or so, and the upper limit thereof may be 85 mol%, 80 mol%, 75 mol%, 70 mol%, 65 mol%, 60 mol%, 55 mol%, or 50 mol% or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The lower limit of the number of silicon atoms contained in the second polyorganosiloxane component may be 20, 25, 30, 35, 40, 45, 50, 55, 60, 65, 70, 75, 80, 85, or 90 or so, and the upper limit may be 1,000, 950, 900, 850, 800, 750, 700, 650, 600, 550, 500, 450, 400, 350, 300, 250, 200, 150, 100, 95, 90, 85, 80, 75, 70, 65, 60, 55, or 50 or so. The number of silicon atoms may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

The second polyorganosiloxane component may have a substantially linear structure. In this case, the polyorganosiloxane may be substantially composed of only M units and D units, or may comprise T and/or Q units together with M units and D units, but may have a structure that the ratio of the T and/or Q units is below a certain level.

For example, in the second polyorganosiloxane component, the upper limit of the ratio of the total number of moles of the T and Q units to the number of moles of all siloxane units contained in the polyorganosiloxane (100 × (number of moles of T unit + number of moles of Q unit)/number of moles of all siloxane units) may be 10 mol%, 9 mol%, 8 mol%, 7 mol%, 6 mol%, 5 mol%, 4 mol%, 3 mol%, 2 mol%, 1 mol%, or 0.5 mol% or so, and the lower limit thereof may be 0 mol% or so. The ratio may be less than or equal to, or less than any one of the above-described upper limits, or may be within a range of less than or equal to, or less than any one of the above-described upper limits while being more than or equal to, or more than any one of the above-described lower limits.

The lower limit of the weight average molecular weight of the second polyorganosiloxane component may be 1,000, 2,000, 3,000, 4,000, 5,000, 6,000, 7,000, 8,000, 9,000, or 9,500 or so, and the upper limit thereof may be 100,000, 90,000, 80,000, 70,000, 60,000, 50,000, 45,000, 40,000, 30,000, 20,000, or 15,000 or so. The weight average molecular weight may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The lower limit of the polydispersity index (PDI) of the second polyorganosiloxane component may be 1, 1.25, or 1.5 or so, and the upper limit thereof may be 5, 3.5, or 2.5 or so. The polydispersity index may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits.

The second polyorganosiloxane component may comprise a compound represented by Formula B below.

[Formula B]

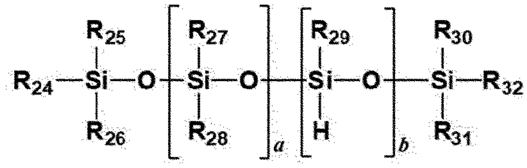

In Formula B, $R_{24}$, $R_{25}$, $R_{26}$, $R_{27}$, $R_{28}$, $R_{29}$, $R_{30}$, $R_{31}$, and $R_{32}$ may each independently be an alkyl group with 1 to 20 carbon atoms, 1 to 16 carbon atoms, 1 to 12 carbon atoms, 1 to 8 carbon atoms, 1 to 4 carbon atoms, 1 to 3 carbon atoms, or 1 or 2 carbon atoms.

In Formula B, a and b may each independently be a number in a range of 1 to 10,000, 1 to 8,000, 1 to 6,000, 1 to 4,000, 1 to 3,000, 1 to 2,000, or 1 to 1,000. In addition, specifically, in Formula B, a and b may each independently be in the range of 2 to 500, 5 to 250, 10 to 200, 15 to 150, 20 to 100, or 25 to 50.

In the silicone resin component, the lower limit of the weight ratio of the second polyorganosiloxane component relative to 100 parts by weight of the first polyorganosiloxane component may be 0.1 parts by weight, 0.25 parts by weight, 0.5 parts by weight, 0.75 parts by weight, 1 part by weight, 1.25 parts by weight, 1.5 parts by weight, 1.75 parts by weight, or 2 parts by weight or so, and the upper limit thereof may be 10 parts by weight, 8 parts by weight, 6 parts by weight, 4 parts by weight or 3.5 parts by weight, 3 parts by weight, or 2.5 parts by weight or so. The ratio may be less than or equal to, or less than any one of the above-described upper limits, or may be more than or equal to, or more than any one of the above-described lower limits, or may be within a range of less than or equal to, or less than any one of the above-described upper limits while being more than or equal to, or more than any one of the above-described lower limits. When the second polyorganosiloxane component is included within the above range, it is possible to secure excellent durability by improving an appropriate crosslinking density.

The release composition according to one example of the present application may comprise a (meth)acrylate-modified silicone compound together with the silicone resin component. The (meth)acrylate-modified silicone compound may be the addition polyorganosiloxane as described above.

Specific details about the addition polyorganosiloxane are as described above.

In one example, the (meth)acrylate-modified silicone compound may be a compound represented by Formula C below. In another example, the silicone compound of the release composition may comprise a compound represented by Formula C below.

The compound of Formula C below is one example of the addition polyorganosiloxane.

[Formula C]

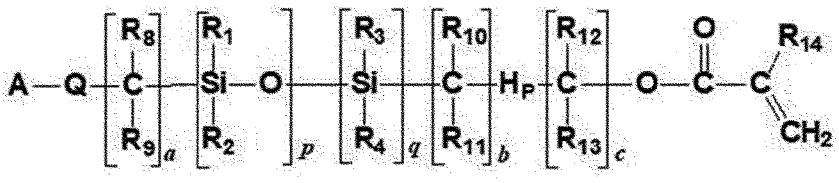

In Formula C, A may be a functional group having a ketone group. The A may be derived from a polymerization initiator having a ketone group.

In another example of the present application, in Formula C, A may be represented by Formula D below.

[Formula D]

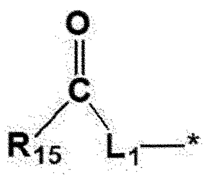

In Formula D, $R_{15}$ may be an aryl group with 5 to 30 carbon atoms, 5 to 25 carbon atoms, 5 to 20 carbon atoms, 5 to 15 carbon atoms, 5 to 10 carbon atoms, 5 to 8 carbon atoms, or 5 or 6 carbon atoms; or a heteroaryl group with 5 to 30 ring atoms, 5 to 25 ring atoms, 5 to 20 ring atoms, 5 to 15 ring atoms, 5 to 10 ring atoms, 5 to 8 ring atoms, or 5 or 6 ring atoms.

In Formula D, $L_1$ is an arylene group with 5 to 30 carbon atoms, 5 to 25 carbon atoms, 5 to 20 carbon atoms, 5 to 15 carbon atoms, 5 to 10 carbon atoms, 5 to 8 carbon atoms, or 5 or 6 carbon atoms, or a heteroaryl group with 5 to 30 ring atoms, 5 to 25 ring atoms, 5 to 20 ring atoms, 5 to 15 ring atoms, 5 to 10 ring atoms, 5 to 8 ring atoms, or 5 or 6 ring atoms, and * means a site bonded to Q of Formula C.

In Formula C, Q may be $CR_5R_6$ or $NR_7$. The Q may be derived from a substituent contained in a polymerization initiator having a ketone group.

As the polymerization initiator having a ketone group capable of forming A and Q above, for example, acetophenone, dimethylaminoacetophenone, 2,2-dimethoxy-2-phenylacetophenone, 2,2-diethoxy-2-phenylacetophenone, 2-hydroxy-2-methyl-1-phenylpropan-1-one, 1-hydroxycyclohexylphenylketone, 2-methyl-1-[4-(methylthio)phenyl]-2-morpholinopropan-1-one, 4-(2-hydroxyethoxy)phenyl-2-(hydroxy-2-propyl)ketone, benzophenone, p-phenylbenzophenone, 4-aminobenzophenone, 4,4'-diethylaminobenzophenone, dichlorobenzophenone, 2-methylanthraquinone, 2-ethylanthraquinone, 2-tert-butylanthraquinone, 2-aminoanthraquinone, 2-methylthioxanthone, 2-ethylthioxanthone, 2-chlorothioxanthone, 2,4-dimethylthioxanthone, 2,4-diethylthioxanthone, benzyldimethylketal, acetophenonedimethylketal, or oligo[2-hydroxy-2-methyl-1[4-(1-methyl)vinyl)phenyl]propanone] may be used, without being particularly limited thereto.

The polymerization initiator having a ketone group capable of forming A and Q above may be a compound having a structure of Formula E below. That is, the A and Q may be derived from a compound having a structure of Formula E below.

[Formula E]

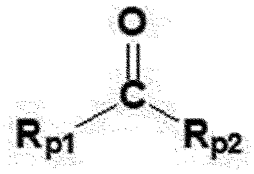

In Formula E, $R_{p1}$ may be an aryl group with 5 to 30 carbon atoms, 5 to 25 carbon atoms, 5 to 20 carbon atoms, 5 to 15 carbon atoms, 5 to 10 carbon atoms, 5 to 8 carbon atoms, or 5 or 6 carbon atoms; or a heteroaryl group with 5 to 30 ring atoms, 5 to 25 ring atoms, 5 to 20 ring atoms, 5 to 15 ring atoms, 5 to 10 ring atoms, 5 to 8 ring atoms, or 5 or 6 ring atoms.

In Formula E, $R_{p2}$ may be an aryl group with 5 to 30 carbon atoms, 5 to 25 carbon atoms, 5 to 20 carbon atoms, 5 to 15 carbon atoms, 5 to 10 carbon atoms, 5 to 8 carbon atoms, or 5 or 6 carbon atoms having one or more substituents selected from the group consisting of an amine group and an alkyl group with 1 to 4 carbon atoms; or a heteroaryl group with 5 to 30 ring atoms, 5 to 25 ring atoms, 5 to 20 ring atoms, 5 to 15 ring atoms, 5 to 10 ring atoms, 5 to 8 ring atoms, or 5 or 6 ring atoms having one or more substituents selected from the group consisting of an amine group and an alkyl group with 1 to 4 carbon atoms. In the $R_{p2}$, the aryl group and heteroaryl group may further have a hydroxy group as a substituent.

In the compound having the structure of Formula E, $R_{p1}$ may be $R_{15}$ in Formula D. Also, in the compound having the structure of Formula E above, the substituent of $R_{p2}$ (if there are multiple, one of the substituents) may be Q in Formula C, and $R_{p2}$ excluding the substituents may be $L_1$ in Formula D.

As the compound represented by Formula C is derived from the polymerization initiator having a ketone group, the release composition according to one example of the present application can initiate polymerization by comprising the (meth)acrylate-modified silicone compound even without comprising a separate polymerization initiator.

In Formula C, $R_1$ to $R_{13}$ may each independently be a hydrogen element or an alkyl group with 1 to 20 carbon atoms, 1 to 16 carbon atoms, 1 to 12 carbon atoms, 1 to 8 carbon atoms, 1 to 4 carbon atoms, 1 to 3 carbon atoms, or 1 or 2 carbon atoms. Also, in Formula C, $R_{14}$ may be a hydrogen element or a methyl group.

In Formula C, $H_p$ may be a peptide bond. As the compound represented by Formula C has a peptide bond, it is possible to impart a strong cohesion force and hydrophilic properties through hydrogen bonding thereto.

In Formula C, a, b, c, p, and q are each independently a number in a range of 1 to 100, 1 to 80, 1 to 60, 1 to 40, 1 to 20, 1 to 10, 1 to 5, or 1 to 3.

As the compound represented by Formula C according to one example of the present application or the above-described addition polyorganosiloxane has siloxane units, it is possible to impart hydrophobic properties while securing soft and flexible properties, and as it has a (meth)acrylic group at the terminal, it is possible to induce a curing reaction by ultraviolet rays.

By using the compound of Formula C above or the addition polyorganosiloxane in an appropriate amount, it secures a strong cohesion force and soft and flexible properties through hydrogen bonding, and simultaneously has both hydrophilic and hydrophobic properties, so that it can secure a cured product having a proper peel force even under room temperature and high temperature conditions, having little change in peel force even under high temperature and ultraviolet irradiation conditions, and having an excellent residual adhesion rate.

The weight average molecular weight ($M_w$)of the compound represented by Formula C according to one example of the present application may be 1,000 g/mol or more, 1,250 g/mol or more, 1,500 g/mol or more, 1,750 g/mol or more, 2,000 g/mol or more, 2,250 g/mol or more, 2,500 g/mol or more, 2,750 g/mol or more, 3,000 g/mol or more, 3,250 g/mol or more, 3,500 g/mol or more, or 3,750 g/mol or more, or may be 10,000 g/mol or less, 9,000 g/mol or less, 8,000 g/mol or less, 7,000 g/mol or less, 6,000 g/mol or less, 5,000 g/mol or less, or 4,000 g/mol or less. When the compound represented by Formula C above has a weight average molecular weight within the above range, an appropriate viscosity for application can be secured to ensure excellent coating properties.

The polydispersity index (PDI) of the compound represented by Formula C according to one example of the present application may be 1 or more, 1.2 or more, 1.4 or more, 1.6 or more, or 1.8 or more, or may be 3 or less, 2.8 or less, 2.6 or less, 2.4 or less, 2.2 or less, or 2 or less. When the compound represented by Formula C above has a polydispersity index within the above range, an appropriate viscosity for application can be secured to ensure excellent coating properties.

The compound represented by Formula C according to one example of the present application or the addition polyorganosiloxane may be produced by reacting a siloxane resin containing a hydroxy group at the terminal and an isocyanate compound containing a (meth)acrylate group under a catalyst, and further adding a polymerization initiator having a ketone group to the reactant to perform the reaction. The specific production processes may be referred to the Example section below.

The upper limit of the weight ratio of the addition polyorganosiloxane relative to 100 parts by weight of the silicone resin component in the release composition may be 20 parts by weight, 19 parts by weight, 18 parts by weight, 17 parts by weight, 16 parts by weight, 15 parts by weight, 14 parts by weight, 13 parts by weight, 12 parts by weight, 11 parts by weight, or 10 parts by weight, and the lower limit thereof may be 0.01 parts by weight, 0.05 parts by weight, 0.1 parts by weight, 0.5 parts by weight, or 1 part by weight or so. The ratio may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits.

When the addition polyorganosiloxane is included in the above weight ratio, it is possible to have an appropriate peel force even under room temperature and high temperature conditions, it is possible to have little change in peel force even under high temperature and ultraviolet irradiation conditions, and it is possible to secure an excellent residual adhesion rate.

The release composition according to one example of the present application may further comprise a catalyst for a curing reaction, for example, a metal catalyst. The metal catalyst may comprise one or more selected from the group consisting of aluminum, bismuth, lead, mercury, tin, zinc, platinum, silver, and zirconium as a central metal element. Also, in the metal catalyst, a siloxane group, an ester group, an ether group, or a carboxyl group may also be bonded to the central metal element. The metal catalyst includes, for example, bis[1,3-bis(2-ethenyl)-1,1,3,3-tetramethyldisiloxane]platinum (CAS No. 81032-58-8), dibutyltin dilaurate or dimethyltin diacetate, and the like, but is not particularly limited thereto, and if it may be generally used in the industry, it may be used without limitation.

Considering the components included in the release composition, the metal catalyst may be a platinum catalyst containing platinum (Pt) as the central metal element. In addition, the release composition may comprise the platinum catalyst in an amount of 0.1 parts by weight or more, 0.5 parts by weight or more, 1 part by weight or more, 1.5 parts by weight or more, 2 parts by weight or more, 2.5 parts by weight or more, 3 parts by weight or more, 3.5 parts by weight or more, 4 parts by weight or more, or 4.5 parts by weight or more, or 10 parts by weight or less, 9 parts by weight or less, 8 parts by weight or less, 7 parts by weight or less, 6 parts by weight or less, or 5 parts by weight or less, relative to 100 parts by weight of the curable silicone resin component. In addition, when the content ratio of the platinum catalyst satisfies the above range, the cured product formation reaction can be effectively promoted while reducing side reactions.

The release composition according to one example of the present application may further comprise an organic solvent. That is, the release composition may be dispersed in an organic solvent. The term dispersion, as used in the present application, may mean a state where a solute is dissolved by a solvent, and may mean a state where the solute is evenly spread even if it is not dissolved in the solvent.

The organic solvent is not particularly limited if it is commonly used in the industry, and tetrahydrofuran, methyl ethyl ketone, toluene, and heptane, and the like, or an organic solvent in which they are mixed in an appropriate weight

ratio may be used.

The organic solvent may be used to sufficiently disperse the release composition. Specifically, although not particularly limited, the release composition may comprise the organic solvent in an amount of 200 parts by weight or more, 250 parts by weight or more, 300 parts by weight or more, 350 parts by weight or more, or 400 parts by weight or more relative to 100 parts by weight of the curable silicone resin component, and the upper limit thereof is sufficient as long as it is determined considering the appropriate viscosity during the process and is not particularly limited, but the release composition may comprise the organic solvent in an amount of 2,000 parts by weight or less, 1,500 parts by weight or less, or 1,000 parts by weight or less relative to 100 parts by weight of the curable silicone resin component.

The release composition according to one example of the present application may further comprise one or two or more additives exemplified below in order to secure additional physical properties. However, the above additives are sufficient if they are generally usable in the industry, which are not necessarily limited to the additives exemplified below.

The release composition according to one example of the present application may further comprise a dispersant. As the dispersant, for example, a polyamideamine and its salt, a polycarboxylic acid and its salt, a modified polyurethane, a modified polyester, a modified poly(meth)acrylate, a (meth)acrylic copolymer, a naphthalenesulfonic acid formalin condensate, a polyoxyethylene alkyl phosphate ester, a polyoxyethylene alkylamine and a pigment derivative, and the like may be used, but dispersants known in the industry may be used without limitation. For example, Disperbyk-1799 (BYK), and the like may be used.

The release composition according to one example of the present application may further comprise a plasticizer. The type of the plasticizer is not particularly limited, but one or more selected from a phthalic acid compound, a phosphoric acid compound, an adipic acid compound, a sebacic acid compound, a citric acid compound, a glycolic acid compound, a trimellitic acid compound, a polyester compound, an epoxidized soybean oil, chlorinated paraffin, a chlorinated fatty acid ester, a fatty acid compound, and a vegetable oil may be used.

As the phthalic acid compound, one or more of dimethyl phthalate, diethyl phthalate, dibutyl phthalate, dihexyl phthalate, di-n-octyl phthalate, di-2-ethylhexyl phthalate, diisooctyl phthalate, dicapryl phthalate, dinonyl phthalate, diisononyl phthalate, didecyl phthalate, diundecyl phthalate, dilauryl phthalate, ditridecyl phthalate, dibenzyl phthalate, dicyclohexyl phthalate, butyl benzyl phthalate, octyl decyl phthalate, butyl octyl phthalate, octyl benzyl phthalate, n-hexyl n-decyl phthalate, n-octyl phthalate and n-decyl phthalate may be used. As the phosphoric acid compound, one or more of tricresyl phosphate, trioctyl phosphate, triphenyl phosphate, octyl diphenyl phosphate, cresyl diphenyl phosphate and trichloroethyl phosphate may be used. As the adipic acid compound, one or more of dibutoxyethoxyethyl adipate (DBEEA), dioctyl adipate, diisooctyl adipate, di-n-octyl adipate, didecyl adipate, diisononyl adipate (DINA), diisodecyl adipate (DIDP), n-octyl n-decyl adipate, n-heptyl adipate and n-nonyl adipate may be used. As the sebacic acid compound, one or more of dibutyl sebacate, dioctyl sebacate, diisooctyl sebacate and butyl benzyl may be used. As the citric acid compound, one or more of triethyl citrate, acetyl triethyl citrate, tributyl citrate, acetyl tributyl citrate and acetyl trioctyl citrate may be used. As the glycolic acid compound, one or more of methyl phthalyl ethyl glycolate, ethyl phthalyl ethyl glycolate and butyl phthalyl ethyl glycolate may be used. As the trimellitic acid compound, one or more of trioctyl trimellitate and tri-n-octyl n-decyl trimellitate may be used. The polyester compound may be a reaction product of a diol selected from butane diol, ethylene glycol, propane 1,2-diol, propane 1,3-diol, polyethylene glycol, glycerol, a diacid (selected from adipic acid, succinic acid, and succinic anhydride) and a hydroxy acid (such as, hydroxystearic acid).

The release composition according to one example of the present application may further comprise a reaction accelerator if necessary. The reaction accelerator may perform a function of accelerating the polymerization reaction of the release composition. The type of the reaction accelerator is not particularly limited, but for example, N,N-dimethyl-p-toluidine (DMPT) and the like may be used.

The release composition according to one example of the present application may comprise a viscosity modifier, for example, a thixotropic agent, a diluent, a surface treatment agent, a dispersion stabilizer, or a reaction control agent, and the like, if necessary, for controlling the viscosity, for example, increasing or decreasing the viscosity, or for controlling the viscosity according to shear force. The thixotropic agent may adjust the viscosity of the release composition according to shear force. The usable thixotropic agent may be exemplified by fumed silica and the like. The diluent is generally used to lower the viscosity of the release composition, and if it may exhibit such an action, various types of diluents known in the industry may be used without limitation. The surface treatment agent is for surface treatment of the filler composition introduced into the cured product of the release composition, and if it may exhibit such an action, various types known in the industry may be used without limitation. The dispersion stabilizer may be used to stabilize dispersibility between components in the release composition, and various types known in the industry may be used without limitation if it may exhibit such an action. The reaction control agent may be used to control chemical reactions such as curing of the release composition, and various types known in the industry may be used without limitation if it may exhibit such an action. In addition, various types known in the industry may be used without limitation if they may exhibit such actions.

The release composition according to one example of the present application may not substantially comprise a silane coupling agent and/or a crosslinking agent. Even if the release composition does not comprise a silane coupling agent and/or a crosslinking agent, the adhesiveness with a base film to be described below can be secured by the

combination of the curable silicone resin component and the silicone compound as described above to maximize solvent resistance.

The meaning that it does not substantially comprise as the term used in the present application is the matter that the relevant substance is not artificially added, which may mean the case that when it exists naturally, it is included in an amount of 1 wt% or less, 0.1 wt% or less, or 1 wt% or less relative to the total weight of the target.

The silane coupling agent is not particularly limited if it is commonly used in the industry, where an example of the coupling agent may include gamma-glycidoxypropyl triethoxy silane, gamma-glycidoxypropyl trimethoxy silane, gamma-glycidoxypropyl methyldiethoxy silane, gamma-glycidoxypropyl triethoxy silane, 3-mercaptopropyl trimethoxy silane, vinyltrimethoxy silane, vinyltriethoxy silane, gamma-methacryloxypropyl trimethoxy silane, gamma-methacryloxypropyl triethoxy silane, gamma-aminopropyl trimethoxy silane, gamma-aminopropyl triethoxy silane, 3-isocyanatopropyl triethoxy silane, gamma-acetoacetatepropyl trimethoxy silane, gamma-acetoacetatepropyl triethoxy silane, beta-cyanoacetyl trimethoxy silane, beta-cyanoacetyl triethoxy silane, and acetoxyaceto trimethoxy silane.

The crosslinking agent is not particularly limited if it is commonly used in the industry, where an example of the crosslinking agent may include an epoxy crosslinking agent such as ethyleneglycol diglycidyl ether, triglycidyl ether, trimethylolpropane triglycidyl ether, N,N,N', N'-tetraglycidyl ethylenediamine or glycerin diglycidyl ether; an aziridine crosslinking agent such as N,N'-toluene-2,4-bis(1-aziridinecarboxamide), N,N'-diphenylmethane-4,4'-bis(1-aziridinecarboxamide), triethylene melamine, bisisoprotaloyl-1-(2-methylaziridine) or tri-1-aziridinylphosphine oxide, or a metal chelate crosslinking agent which is a compound that a polyvalent, such as aluminum, iron, zinc, tin, titanium, antimony, magnesium and/or vanadium, is coordinated to acetylacetone or ethyl acetoacetate, and the like, an isocyanate compound such as isophorone diisocyanate, methylene dicyclohexyl diisocyanate, or cyclohexane diisocyanate, or a derivative thereof such as its dimer or trimer, or a reaction product of any of the foregoing with a polyol (e.g., trimethylolpropane), an alkylene diisocyanate compound with 1 to 20 carbon atoms, 1 to 16 carbon atoms, 1 to 12 carbon atoms, or 1 to 8 carbon atoms such as s hexamethylene diisocyanate (HMDI), or a derivative thereof such as its dimer or trimer, or a reaction product of any of the foregoing with a polyol (e.g., trimethylolpropane), and the like.

The present application also relates to a release layer. The release layer may comprise the release composition or a cured product thereof.

Therefore, the release layer may comprise the silicone resin component, and the silicone compound or the addition polyorganosiloxane. Also, the release layer may be formed by curing the above-described release composition according to one example of the present application. The curing may be appropriately performed according to various methods, as described above. In addition, the release layer may comprise components remaining after curing the above-described release composition according to one example of the present application.

The release layer according to one example of the present application may comprise the silicone resin component in the range of 80 wt% to 95 wt% relative to the total weight. In another example, the release layer may comprise the silicone resin component in an amount of 81 wt% or more, 82 wt% or more, 83 wt% or more, 84 wt% or more, or 85 wt% or more, or 94 wt% or less, 93 wt% or less, 92 wt% or less, 91 wt% or less, or 90 wt% or less relative to the total weight. When the release layer comprises the silicone resin component within the above range, it is possible to secure an appropriate release peel force as well as an excellent residual adhesion rate.

The curable silicone resin component of the release layer according to one example of the present application may comprise a first polyorganosiloxane component containing an alkenyl group at the terminal and containing a dialkylsiloxane repeating unit, and may further comprise a dialkylsiloxane repeating unit and a second polyorganosiloxane component containing a dialkylsiloxane repeating unit and a monoalkylsiloxane repeating unit.

Since the first polyorganosiloxane component and the second polyorganosiloxane component are the same as described in the release composition according to one example of the present application described above, detailed contents will be omitted.

The silicone compound of the release layer according to one example of the present application may include the (meth)acrylate-modified silicone compound or the addition polyorganosiloxane. Since the (meth)acrylate-modified silicone compound is the same as described in the above-described release composition according to one example of the present application, detailed contents will be omitted.

In the release layer according to one example of the present application, an absolute value of a change rate of peel force ($\Delta$P1) according to Equation 1 below may be within a predetermined range. For example, the upper limit of the absolute value of the change rate may be 30%, 29%, 28%, 27%, 26%, 25%, 24%, 23%, 22%, 21%, 20%, 19%, 18%, 17%, 16%, 15%, 14%, or 13% or so, and the lower limit thereof may be 0.001%, 0.01%, or 0.1% or so. The absolute value may be more than or equal to, or more than any one of the above-described lower limits, or may be less than or equal to, or less than any one of the above-described upper limits, or may be within a range of less than or equal to, or less than any one of the above-described upper limits while being more than or equal to, or more than any one of the above-described lower limits. The $\Delta$P1 may be a negative number or a positive number.

[Equation 1]

$$\Delta P1 = 100X(P_2-P_1)/P_1$$

In Equation 1, $P_1$ is the release peel force at a peel angle of 180 degrees and a peel rate of 0.3 m/min at 25°C after maintaining the release layer in a state of being attached to a pressure-sensitive adhesive layer at 25°C for 24 hours, and $P_2$ is the release peel force at a peel angle of 180 degrees and a peel rate of 0.3 m/min at 25°C after irradiating the release layer with ultraviolet rays in a state of being attached to a pressure-sensitive adhesive layer and maintaining it at 60°C for 24 hours.

Methods for measuring the peel forces $P_1$ and $P_2$ of Equation 1 above are described in the Example section of this specification. For example, the peel force $P_1$ is the peel force $A_{RT(1d)}$ of the example section, and the peel force $P_2$ is the peel force $A_{21}$ or $A_{22}$ of the example section.

The sequence of ultraviolet irradiation and maintenance at 60°C for measuring the peel force $P_2$ of Equation 1 is not limited. That is, the maintenance at 60°C can be performed after irradiation with ultraviolet rays, and conversely, the irradiation with ultraviolet rays can be performed after maintaining at 60°C.

When ultraviolet rays are applied to the release layer for confirmation of Equation 1, the ultraviolet rays can be irradiated for about 15 seconds to 90 seconds using light with an energy of about 1 J/m$^2$ to 3 J/m$^2$ or so and a wavelength of about 300 to 400 nm or so.

The release layer according to one example of the present application may have a residual adhesion rate (Ad) according to Equation 2 below in a predetermined range. For example, the lower limit of the residual adhesion rate may be 80%, 82%, 84%, 86%, 88%, 90%, 92%, 94%, 96%, or 97% or so. The closer the residual adhesion rate (Ad) according to Equation 2 below is to 100%, the better the performance exhibits, so that the upper limit of the residual adhesion rate (Ad) is not particularly limited, but may be, for example, 100%, 99.9%, or 99% or so. The residual adhesion rate may be more than or equal to, or more than any one of the above-described lower limits, or may be within a range of less than or equal to, or less than any one of the above-described upper limits while being more than or equal to, or more than any one of the above-described lower limits.

[Equation 2]

$$\text{Residual adhesion rate (Ad)} = 100XA_f/A_i$$

In Equation 2, Ai is the release peel force measured while attaching a pressure-sensitive adhesive tape to the release layer and peeling the pressure-sensitive adhesive tape at a peel angle of 180 degrees and a peel rate of 0.3 m/min at 25°C, and Af is the release peel force measured while attaching a pressure-sensitive adhesive tape to the release layer measuring the peel force Ai in the same manner as at the time of measuring the peel force Ai, and peeling the pressure-sensitive adhesive tape at a peel angle of 180 degrees and a peel rate of 0.3 m/min at 25°C.

The residual adhesion rate (Ad) according to Equation 2 above can be measured specifically according to the example section.

In the release layer according to one example of the present application, the peel force $P_1$ of Equation 1 may be in a range of 10 gf/inch to 30 gf/inch. In another example, the release peel force $P_1$ may be 11 gf/inch or more, 12 gf/inch or more, 13 gf/inch or more, 14 gf/inch or more, 15 gf/inch or more, 16 gf/inch or more, or 17 gf/inch or more, or may be 29 gf/inch or less, 28 gf/inch or less, 27 gf/inch or less, 26 gf/inch or less, 25 gf/inch or less, 24 gf/inch or less, 23 gf/inch or less, 22 gf/inch or less, 21 gf/inch or less, 20 gf/inch or less, or 19 gf/inch or less.

When the peel force $P_1$ of the release layer satisfies the above range, it can be regarded to have an appropriate peel force such that when it has been attached to an adherend, it easily peels off in a situation where it is to be peeled off from the adherend while it does not easily peel off during the process.

In the release layer according to one example of the present application, the release peel force measured at a peel angle of 180 degrees and a peel rate of 0.3 m/min after maintaining the release layer at 60°C for 24 hours in a stage of being attached to a pressure-sensitive adhesive layer may be in a range of 10 gf/inch to 45 gf/inch. In another example, the release peel force may be 11 gf/inch or more, 12 gf/inch or more, 13 gf/inch or more, 14 gf/inch or more, 15 gf/inch or more, 16 gf/inch or more, or 17 gf/inch or more, or may be 44 gf/inch or less, 42 gf/inch or less, 40 gf/inch or less, 38 gf/inch or less, 36 gf/inch or less, 34 gf/inch or less, 32 gf/inch or less, 30 gf/inch or less, 28 gf/inch or less, 26 gf/inch or less, 24 gf/inch or less, 22 gf/inch or less, or 20 gf/inch or less. The method of measuring the release peel force is described in the example section of this specification. The peel force corresponds to the peel force $A_{60(1d)}$ measured in the examples of the present specification.

When the release layer satisfies the peel force, it can be regarded to have an appropriate peel force such that

when it has been attached to an adherend even in a high temperature process, it is easily peeled off in a situation where it is to be peeled off from the adherend while it does not easily peel off during the process.

The present application also relates to a release film or pressure-sensitive adhesive film comprising the release layer. The release film may comprise a base film and the release layer attached to one or both sides of the base film. In addition, the pressure-sensitive adhesive film may comprise the release layer; and a pressure-sensitive adhesive layer attached to the release layer.

The types of base films and pressure-sensitive adhesive layers applied in the release film and the pressure-sensitive adhesive film are not particularly limited, where known base films for the release film or pressure-sensitive adhesive layers for the pressure-sensitive adhesive film may be applied.

For example, the base film may be exemplified by papers such as fine paper, clay-coated paper, cast-coated paper, and kraft paper; laminated paper obtained by laminating a thermoplastic resin such as a polyethylene resin to these papers; paper material sheets such as synthetic paper; glass sheets; polyolefin resins such as a polyethylene resin and a polypropylene resin; polyester resins such as a polybutylene terephthalate resin, a polyethylene terephthalate resin, and a polyethylene naphthalate resin; polyetherimide resins; acetate resins; polystyrene resins; or vinyl chloride resins, and the like, and the pressure-sensitive adhesive layer may be exemplified by a known acrylic, urethane-based, or silicone-based pressure-sensitive adhesive layer.

The thicknesses of the release layer, base film, and pressure-sensitive adhesive layer are appropriately selected depending on the use, which are not particularly limited. For example, the base film may typically be formed to have a thickness of 5 $\mu$m to 500 $\mu$m or 10 $\mu$m to 100 $\mu$m.

Since the release layer of the release film according to one example of the present application is the same as the release layer according to one example of the present application described above, detailed description will be omitted.

The thickness of the release layer is not particularly limited, which is appropriately selected depending on the use, and it may typically be formed to have a thickness of 30 nm to 5 $\mu$m.

The release film according to one example of the present application may be manufactured by applying the release composition according to one example of the present application to one side of the base film and then curing the release composition to form a release layer.

The method of applying the release composition is not particularly limited if it is used in the industry, wherein for example, Mayer bar coating, knife coating, reverse roll coating, roll coating, calendar coating, curtain coating, cast coating, or dip coating, and the like may be used.

In addition, the curing may be appropriately performed according to various methods, as described above, where thermal curing may be appropriate for the curing. The thermal curing may be performed appropriately considering the components included in the release layer, their content ratios, and thicknesses, and the like, and for example, may be performed at 100°C or more, 110°C or more, 120°C or more, 130°C or more, 140°C or more, or 150°C or more in a range of 15 seconds to 60 minutes. For the curing, irradiation of ultraviolet rays, such as the matter of being performed to measure the peel force $P_2$ as described above, may also be performed, if necessary.

## Advantageous Effects

The present application can provide a polyorganosiloxane and a release composition that can form a release layer capable of securing solvent resistance by maximizing a bonding force between a base film and the release layer.

Also, the present application can provide a polyorganosiloxane and a release composition that can form a release layer capable of having an appropriate peel force even under room temperature and high temperature conditions, having a little change in the peel force even under high temperature and ultraviolet irradiation conditions, and securing an excellent residual adhesion rate.

In addition, the present application can provide a release layer, and a release film and a pressure-sensitive adhesive film comprising the release layer as applications of the polyorganosiloxane and the release composition.

## Description of Drawings

Figure 1 is $^1$H NMR measurement data of the polyorganosiloxane prepared in Preparation Example.

## Mode for Invention

Hereinafter, the present application will be described through examples and comparative examples, but the scope of the present application is not limited to the content presented below.

### 1. Release peel force evaluation

A specimen was prepared by laminating a pressure-sensitive adhesive layer of a pressure-sensitive adhesive tape (TESA7475 PV2, TESA) for measuring a release force on the release layer of each release film of Examples or Comparative Examples. The attachment was performed by placing the pressure-sensitive adhesive tape on the release layer and then reciprocating a roller with a load of 2.5 kg three times. Subsequently, while the pressure-sensitive adhesive tape (TESA7475) was peeled at room temperature (about 25°C) at a peel angle of 180 degrees and a peel rate of 0.3 m/min, the release peel force was measured using a physical property measuring device (AR-1000, Cheminstruments).

### 2. Residual adhesion rate (Ad) evaluation

A residual adhesion rate Ad was confirmed according to Equation A below.

[Equation A]

$$Ad = 100XAf/Ai$$

In Equation A, Ai is the release peel force measured after maintaining the specimen prepared according to the content described in the release peel force evaluation method at room temperature (about 25°C) for about 24 hours.
In Equation A, Af is the release peel force measured after attaching a standard tape (TESA7475, TESA) to the release layer of the release film after measuring the peel force Ai in the same manner as measuring the peel force Ai again to prepare a specimen, and then maintaining the specimen at room temperature (about 25°C) for about 24 hours.
The release peel forces Ai and Af were measured using a physical property measuring device (AR-1000, Cheminstruments) in the same manner as in the release peel force measurement method while the pressure-sensitive adhesive tape (TESA7475) was peeled at room temperature (about 25°C) at a peel angle of 180 degrees and a peel rate of 0.3 m/min.

### 3. Solvent resistance evaluation

Solvent resistance was evaluated by rubbing the release layer of each release film of Examples or Comparative Examples with a cloth soaked in toluene until at least a part of the release layer was peeled off. The rubbing with the cloth was performed using No.542-AB equipment (Yasauda).
The evaluation criteria for solvent resistance are as follows.

<Solvent resistance evaluation criteria>

P: The number of rubbing times is 8 or more until at least a part of the release layer is peeled off.
N: The number of rubbing times is less than 8 until at least a part of the release layer is peeled off.

### Preparation Example 1. Preparation of silicone compound (A)

A polyorganosiloxane (KF-6001, Shinetsu Silicone) of Formula K1 below was prepared.

[Formula K1]

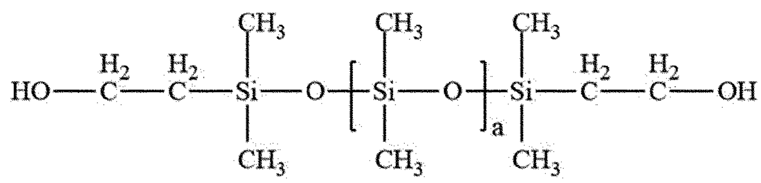

In Formula K1, a was about 30 or so, and the weight average molecular weight was about 2,000 g/mol or so.
A mixture was prepared by mixing the polyorganosiloxane of Formula K1, MOI (methacryloyloxyethyl isocyanate), and THF (tetrahydrofuran) in a weight ratio of 10:0.39:10 (K1: MOI: THF). The mixing ratio adjusts the equivalence ratio so that approximately half of all the hydroxy groups present in the polyorganosiloxane of Formula K1 above can

react with the MOI. Subsequently, 0.14 parts by weight of DBTDL (dibutyltin dilaurate) was added thereto relative to 100 parts by weight of the polyorganosiloxane, and reacted at 60°C. Through the above reaction, the hydroxyl group of the polyorganosiloxane of Formula K2 above reacts with the isocyanate of the MOI to form the polyorganosiloxane with a structure of Formula K2 below, in which the methacryloyloxyethyl group is linked to the terminal of the polyorganosiloxane by a peptide (urethane) bond.

[Formula K2]

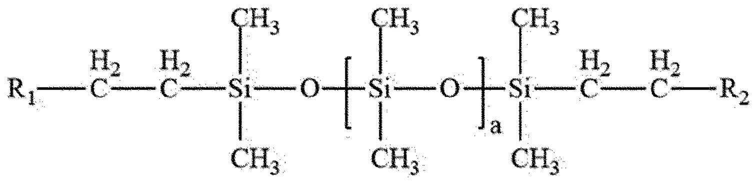

In Formula K2, a is the same as in Formula K1, and $R_1$ and $R_2$ are each independently a hydroxy group or a functional group of Formula K2-1 below.

[Formula K2-1]

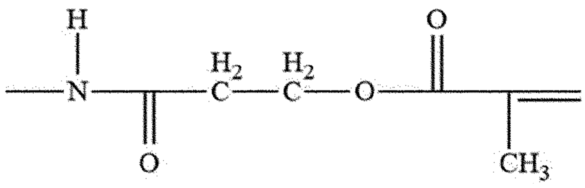

In Formula K2-1, the leftmost nitrogen atom is linked to the rightmost or leftmost carbon atom of Formula K2.

Considering the actual reaction, the resultant product after the reaction may be a mixture of a polyorganosiloxane in which both $R_1$ and $R_2$ are hydroxy groups in the structure of Formula K2 above, a polyorganosiloxane in which both $R_1$ and $R_2$ are functional groups of Formula K2-1 and/or a polyorganosiloxane in which any one of $R_1$ and $R_2$ is a hydroxy group, and the other is a functional group of Formula K2-1.

A mixture was prepared by mixing the resultant product of the above reaction (including the polyorganosiloxane of Formula K2) and 4-ABP (4-aminobenzophenone) in a weight ratio of 100:4.2 (resultant product: 4-ABP), and reacted at about 60°C. The mixing ratio adjusts the equivalence ratio so that most of the hydroxy groups present in the resultant product of the above reaction can react with the 4-ABP. Through the above reaction, the amino group of the 4-ABP may react with the hydroxy group present in the resultant product, thereby obtaining a polyorganosiloxane (weight average molecular weight: about 3,800 g/mol) having an average unit of Formula 1A below. The average unit below summarizes the ratio of each siloxane unit when the total number of moles of all siloxane units contained in the polyorganosiloxane is set to 1.

[Formula 1A] $(R^aMe_2SiO_{1/2})_{0.03}(R^bMe_2SiO_{1/2})_{0.03}(Me_2SiO_{2/2})_{0.94}$

In Formula 1A, $R^a$ is a functional group of Formula K2-2 above, $R^b$ is a functional group of Formula K2-1 below, and Me is a methyl group.

[Formula K2-2]

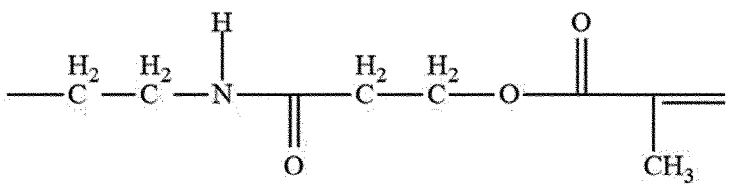

[Formula 1A-1]

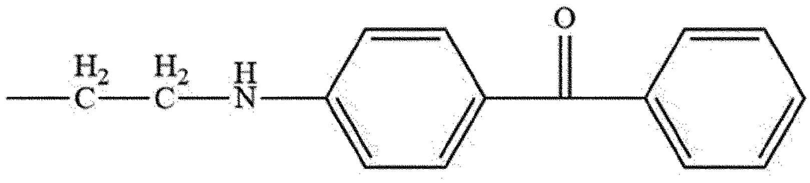

In Formula K2-2 above, the leftmost carbon atom is linked to the silicon atom of the siloxane unit of Formula 1A above, and the leftmost carbon atom of Formula 1A-1 is linked to the silicon atom of the siloxane unit of Formula 1A.

Figure 1 is the $^1H$ NMR measurement result of the polyorganosiloxane of Formula 1A above. The $^1H$ NMR analysis was performed by a known measuring device (Avance Neo, Bruker), and chemical shift was expressed using TMS (dilute tetramethylsilane in $CDCl_3$) as the RC (Reference Compound).

**Example 1**

A polyorganosiloxane of Formula 2A below (KS-847H, Shinetsu Silicone) (weight average molecular weight about 350,000 g/mol), a polyorganosiloxane of Formula 3A below (X-92-122, Shinetsu Silicone) (weight average molecular weight about 10,000 g/mol), a polyorganosiloxane with an average unit of Formula 1A in Preparation Example 1 above, a platinum catalyst (PL-50L, Shinetsu Silicone), and a solvent (S) were mixed in the weight ratio shown in Table 1 below to prepare a curable composition. As the solvent (S), one obtained by mixing THF (tetrahydrofuran), MEK (methylethyl ketone), toluene (T), and n-heptane (H) in a weight ratio of 30:20:30:20 (THF: MEK: T: H) was used.

[Formula 2A]

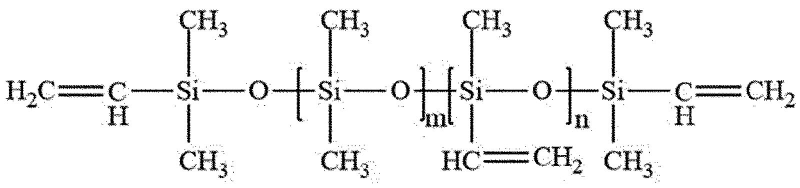

In Formula 2A, m is a number of about 1,500 or so, and n is a number of about 12 to 13 or so.

[Formula 3A]

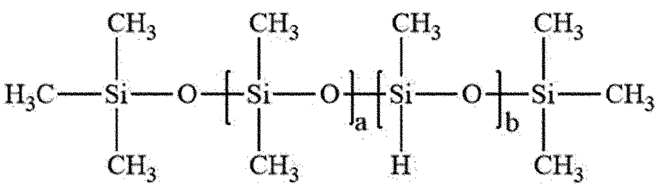

In Formula 3A, a and b are each a number of about 34 to 36 or so.

The curable composition was coated with a Mayer bar on one side of a base film (PET (polyethylene terephthalate) film (SG00, SKC)) with a thickness of about 50 μm or so, and cured in an oven at about 150°C for about 3 minutes or so to produce a release film with a release layer formed.

**Examples 2 and 3 and Comparative Examples 1 to 3**

Curable compositions, release layers, and release films were prepared in the same manner as in Example 1, except that the weight ratios upon formulation were changed as shown in Table 1 below.

The ratios in Table 1 below are weight ratios.

[Table 1]

| | Formula 2A | Formula 3A | Platinum catalyst (Ptc) | Solvent | Formula 1A |
|---|---|---|---|---|---|
| Example 1 | 5 | 0.1 | 0.25 | 20 | 0.5 |
| Example 2 | 5 | 0.1 | 0.25 | 20 | 0.05 |
| Example 3 | 5 | 0.1 | 0.25 | 20 | 0.25 |
| Comparative Example 1 | 5 | 0.1 | 0.25 | 20 | - |

The physical property evaluation results for the release films of Examples and Comparative Examples were summarized in Table 2 below. In Table 2 below, all the units for release peel forces are gf/inch.

[Table 2]

| | Example 1 | Example 2 | Example 3 | Comparative Example 1 |
|---|---|---|---|---|
| $A_{RT(1d)}$ | 18.8 | 18.3 | 17.1 | 16.1 |
| $A_{60(1d)}$ | 19.5 | 18.6 | 17.8 | 17.4 |
| $A_{21}$ | 19.9 | 19.7 | 18.1 | 17.8 |
| $\Delta A1$ | 5.85 | 7.65 | 5.85 | 10.56 |
| $A_{22}$ | 20.3 | 19.3 | 19.3 | 17.4 |
| $\Delta A2$ | 7.98 | 5.46 | 12.87 | 8.07 |
| Ad | 97.9 | 97.5 | 98.8 | 98.1 |
| Solvent resistance | P | P | P | N |
| Number of times of solvent resistance | 40 | 10 | 20 | 7 |

In Table 2, $A_{RT(1d)}$, $A_{60(1d)}$, $A_{21}$, and $A_{22}$ are all release peel forces measured according to the above release peel force evaluation method, and the unit thereof is gf/inch.

In Table 2, $A_{RT(1d)}$ is the release peel force measured after maintaining the specimen manufactured according to the content described in the release peel force evaluation method at room temperature (about 25°C) for about 24 hours, and $A_{60(1d)}$ is the release peel force measured after maintaining the specimen manufactured according to the content described in the release peel force evaluation method at 60°C for about 24 hours.

In Table 2, $A_{21}$ is the release peel force measured after irradiating the specimen manufactured according to the content described in the release peel force evaluation method with ultraviolet rays and maintaining it at 60°C for 24 hours, and $A_{22}$ is the release peel force measured after maintaining the specimen manufactured according to the content described in the release peel force evaluation method at 60°C for 24 hours, and then irradiating it with ultraviolet rays. The ultraviolet ray irradiation was performed using a metal halide lamp by irradiating it with ultraviolet rays having a wavelength in the range of about 300 nm to 400 nm at a light quantity of about 3 $J/m^2$.

In Table 2, $\Delta A1$ is a value obtained by substituting the peel forces $A_{RT(1d)}$ and $A_{21}$ into the equation $100\times(A_{21}-A_{RT(1d)})/A_{RT(1d)}$, and $\Delta A2$ is a value obtained by substituting the peel forces $A_{RT(1d)}$ and $A_{22}$ into the equation $100\times(A_{22}-A_{RT(1d)})/A_{RT(1d)}$.

In Table 2, Ad is the residual adhesion rate Ad obtained by Equation A above.

In Table 2, the solvent resistance is summarized according to the criteria of the solvent resistance evaluation method, and the number of times of the solvent resistance is the number of times of rubbing until at least a part of the release layer is peeled in the solvent resistance evaluation.

## Claims

1. A polyorganosiloxane comprising a siloxane unit of Formula 1 below and a siloxane unit of Formula 2 below:

[Formula 1] $(R^1_mR^2_nSiO_{(4-m-n)/2})$

wherein, $R^1$ and $R^2$ are each a substituent bonded to a silicon atom, where $R^1$ is a functional group containing a carbon-carbon double bond, and $R^2$ is hydrogen, a hydroxy group, an alkoxy group, or a monovalent hydrocarbon group, m is a number of 1 or more, n is a number of 0 or more, and m+n is a number in a range of 1 to 3:

[Formula 2] $(R^3_pR^4_qSiO_{(4-p-q)/2})$

wherein, $R^3$ and $R^4$ are each a substituent bonded to a silicon atom, where $R^3$ is a ketone group-containing functional group, and $R^3$ is hydrogen, a hydroxy group, an alkoxy group, or a monovalent hydrocarbon group, p is a number of 1 or more, and q is a number of 0 or more, and p+q is a number in a range of 1 to 3.

**2.** The polyorganosiloxane according to claim 1, wherein the functional group containing a carbon-carbon double bond is represented by Formula 3 below:

[Formula 3]

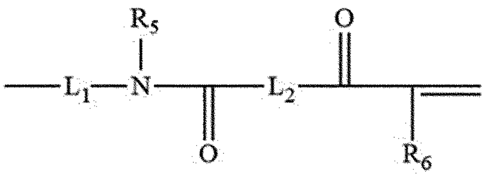

wherein, $L_1$ is a single bond, an alkylidene group, or an alkylene group, $L_2$ is an alkylidene group or an alkylene group, $R_5$ and $R_6$ are each independently hydrogen or an alkyl group, and $L_1$ or the nitrogen atom of Formula 3 above is linked to the silicon atom of the siloxane unit of Formula 3.

**3.** The polyorganosiloxane according to claim 1, wherein the ketone group-containing functional group is represented by Formula 4 below:

[Formula 4]

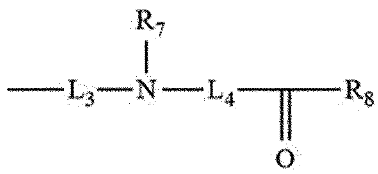

wherein, $L_3$ is a single bond, an alkylidene group, or an alkylene group, $L_4$ is an arylene group, $R_7$ is hydrogen or an alkyl group, $R_8$ is an aryl group, and $L_3$ of Formula 4 is linked to the silicon atom of the siloxane unit.

**4.** The polyorganosiloxane according to claim 1, having an average unit of Formula 5 below:

[Formula 5] $R^1_aR^3_bR^5_cSiO_{(4-a-b-c)/2}$

wherein, $R^1$ is the same as $R^1$ in Formula 1, $R^3$ is the same as $R^3$ in Formula 2, $R^5$ is hydrogen, a hydroxy group, an alkoxy group, or a monovalent hydrocarbon group, a is a number in a range of 0.001 to 1, b is a number in a range of 0.001 to 1, and c is a number in a range of 0.1 to 10.

**5.** The polyorganosiloxane according to claim 1, having a weight average molecular weight in a range of 500 g/mol to 10,000 g/mol.

**6.** A release composition comprising:

a curable silicone resin component; and

the polyorganosiloxane according to any one of claims 1 to 5.

**7.** The release composition according to claim 1, wherein the curable silicone resin component is an addition-curing silicone resin component.

**8.** The release composition according to claim 6, wherein the curable silicone resin component comprises a polyorganosiloxane having an average unit of Formula 6 below and a polyorganosiloxane having an average unit of Formula 7 below:

[Formula 6] $P_aQ_bSiO_{(4-a-b)/2}$

wherein, P is an alkenyl group, Q is an alkoxy group, a hydroxy group, or a monovalent hydrocarbon group, a is a number in a range of 0.0001 to 0.1, and b is a number in a range of 1 to 4:

[Formula 7] $H_cQ_dSiO_{(4-c-d)/2}$

wherein, it is an alkoxy group, a hydroxy group, or a monovalent hydrocarbon group, c is a number in a range of 0.01 to 0.9, and d is a number in a range of 1 to 4.

**9.** The release composition according to claim 8, wherein the polyorganosiloxane of Formula 6 comprises one or more siloxane units selected from the group consisting of a siloxane unit of Formula 8 below and a siloxane unit of Formula 9 below:

[Formula 8] $ViR^6{}_2SiO_{1/2}$

[Formula 9] $ViR^6SiO_{2/2}$

wherein, Vi is an alkenyl group, and $R^6$ is a hydroxy group, an alkoxy group, or a monovalent hydrocarbon group.

**10.** The release composition according to claim 8, wherein the polyorganosiloxane of Formula 7 comprises a siloxane unit of Formula 10 below:

[Formula 10] $HR^6SiO_{2/2}$

wherein, $R^6$ is a hydroxy group, an alkoxy group, or a monovalent hydrocarbon group.

**11.** The release composition according to claim 6, comprising 19 parts by weight or less of the polyorganosiloxane relative to 100 parts by weight of the curable silicone resin component.

**12.** The release composition according to claim 8, wherein the polyorganosiloxane having the average unit of Formula 6 has a weight average molecular weight in a range of 100,000 g/mol to 1,000,000 g/mol.

**13.** The release composition according to claim 8, wherein the polyorganosiloxane having the average unit of Formula 7 has a weight average molecular weight in a range of 1,000 g/mol to 50,000 g/mol.

**14.** A release layer comprising the release composition of claim 7 or a cured product thereof.

**15.** The release layer according to claim 14, wherein the absolute value of the peel force change rate ΔP1 according to Equation 1 below is 30% or less:

[Equation 1]

$$\Delta P1 = 100X(P_2-P_1)/P_1$$

wherein, $P_1$ is the release peel force at a peel angle of 180 degrees and a peel rate of 0.3 m/min at 25°C after maintaining the release layer in a state of being attached to a pressure-sensitive adhesive layer at 25°C for 24 hours, and $P_2$ is the release peel force at a peel angle of 180 degrees and a peel rate of 0.3 m/min at 25°C after irradiating

the release layer with ultraviolet rays in a state of being attached to a pressure-sensitive adhesive layer and maintaining it at 60°C for 24 hours.

**16.** The release layer according to claim 14, wherein a residual adhesion rate Ad according to Equation 2 below is 80% or more:

[Equation 2]

$$Ad = 100XAf/Ai$$

wherein, Ai is the release peel force measured while attaching a pressure-sensitive adhesive tape to the release layer and peeling the pressure-sensitive adhesive tape at a peel angle of 180 degrees and a peel rate of 0.3 m/min at 25°C, and Af is the release peel force measured while attaching a pressure-sensitive adhesive tape to the release layer measuring the peel force Ai in the same manner as at the time of measuring the peel force Ai, and peeling the pressure-sensitive adhesive tape at a peel angle of 180 degrees and a peel rate of 0.3 m/min at 25°C.

**17.** A release film comprising a base film and the release layer of claim 14 attached to one side or both sides of the base film.

**18.** A pressure-sensitive adhesive film comprising the release layer of claim 14; and a pressure-sensitive adhesive layer attached to the release layer.

[Figure 1]

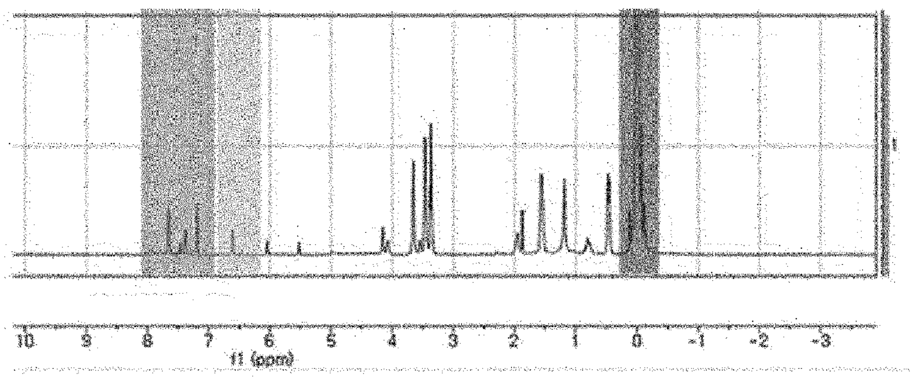

## INTERNATIONAL SEARCH REPORT

International application No.
**PCT/KR2023/002013**

**A. CLASSIFICATION OF SUBJECT MATTER**

**C08K 5/5419**(2006.01)i; **C08K 5/544**(2006.01)i; **C08K 5/56**(2006.01)i; **C08L 83/04**(2006.01)i; **C08G 77/20**(2006.01)i; **C08G 77/12**(2006.01)i; **C09D 183/04**(2006.01)i; **C09D 7/63**(2018.01)i

According to International Patent Classification (IPC) or to both national classification and IPC

**B. FIELDS SEARCHED**

Minimum documentation searched (classification system followed by classification symbols)

C08K 5/5419(2006.01); C08F 290/06(2006.01); C08F 299/08(2006.01); C08G 77/08(2006.01); C08G 77/455(2006.01); C08K 5/54(2006.01); C08L 67/00(2006.01); C08L 83/04(2006.01); C08L 83/14(2006.01); C09J 167/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), PubChem, Google & keywords: 폴리오가노실록산 (polyorganosiloxane), 탄소-탄소 이중 결합을 포함하는 관능기 (functional group containing carbon-carbon double bond), 케톤기 함유 관능기 (functional group containing ketone group), 이형 필름 (releasing film), 접착 필름 (adhesive film)

**C. DOCUMENTS CONSIDERED TO BE RELEVANT**

| Category* | Citation of document, with indication, where appropriate, of the relevant passages | Relevant to claim No. |
|---|---|---|
| A | JP 5860622 B2 (BRIDGESTONE CORP.) 16 February 2016 (2016-02-16)<br>See paragraphs [0011], [0012], [0031], [0032] and [0040]; and claim 1. | 1-18 |
| A | KR 10-2011-0013891 A (KOREA ADVANCED INSTITUTE OF SCIENCE AND TECHNOLOGY) 10 February 2011 (2011-02-10)<br>See entire document. | 1-18 |
| A | KR 10-2011-0084601 A (KOREA ADVANCED INSTITUTE OF SCIENCE AND TECHNOLOGY) 26 July 2011 (2011-07-26)<br>See entire document. | 1-18 |
| A | KR 10-2015-0131109 A (MOMENTIVE PERFORMANCE MATERIALS INC.) 24 November 2015 (2015-11-24)<br>See entire document. | 1-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 May 2023** | **15 May 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

INTERNATIONAL SEARCH REPORT

International application No.
PCT/KR2023/002013

C. DOCUMENTS CONSIDERED TO BE RELEVANT

| Category* | Citation of document, with indication, where appropriate, of the relevant passages | Relevant to claim No. |
|---|---|---|
| A | US 2016-0244606 A1 (KING INDUSTRIES) 25 August 2016 (2016-08-25)<br>See entire document. | 1-18 |

Form PCT/ISA/210 (second sheet) (July 2022)

**INTERNATIONAL SEARCH REPORT**
**Information on patent family members**

International application No.
**PCT/KR2023/002013**

| Patent document cited in search report | Publication date (day/month/year) | Patent family member(s) | Publication date (day/month/year) |
|---|---|---|---|
| JP 5860622 B2 | 16 February 2016 | JP 2013-023548 A | 04 February 2013 |
| KR 10-2011-0013891 A | 10 February 2011 | EP 2290008 A2 | 02 March 2011 |
| | | EP 2290008 A3 | 09 November 2011 |
| | | JP 2011-032470 A | 17 February 2011 |
| | | JP 5492000 B2 | 14 May 2014 |
| | | KR 10-1259887 B1 | 02 May 2013 |
| | | US 2011-0034581 A1 | 10 February 2011 |
| | | US 8658753 B2 | 25 February 2014 |
| KR 10-2011-0084601 A | 26 July 2011 | KR 10-1251553 B1 | 08 April 2013 |
| KR 10-2015-0131109 A | 24 November 2015 | CN 105189397 A | 23 December 2015 |
| | | EP 2969996 A1 | 20 January 2016 |
| | | EP 2969996 A4 | 16 November 2016 |
| | | JP 2016-514191 A | 19 May 2016 |
| | | TW 201434882 A | 16 September 2014 |
| | | US 2016-0060494 A1 | 03 March 2016 |
| | | US 9493691 B2 | 15 November 2016 |
| | | WO 2014-163917 A1 | 09 October 2014 |
| US 2016-0244606 A1 | 25 August 2016 | DE 112016000869 T5 | 18 January 2018 |
| | | US 10640641 B2 | 05 May 2020 |
| | | US 2018-0237635 A1 | 23 August 2018 |
| | | US 2020-0062953 A1 | 27 February 2020 |
| | | US 9976028 B2 | 22 May 2018 |
| | | WO 2016-137881 A1 | 01 September 2016 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220017903
- JP 2011052207 A

### Non-patent literature cited in the description

- *CHEMICAL ABSTRACTS,* 81032-58-8